(19) Europäisches Patentamt
European Patent Office
Office européen des brevets

(11) **EP 4 592 934 A1**

(12) **EUROPEAN PATENT APPLICATION**
published in accordance with Art. 153(4) EPC

(43) Date of publication:
**30.07.2025 Bulletin 2025/31**

(21) Application number: **23867342.0**

(22) Date of filing: **12.09.2023**

(51) International Patent Classification (IPC):
*G06Q 30/06* (2023.01)

(52) Cooperative Patent Classification (CPC):
**G06F 3/04842; G06Q 30/0207; G06Q 30/06;
G06Q 30/0601**

(86) International application number:
**PCT/CN2023/118205**

(87) International publication number:
**WO 2024/061053 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.09.2022 CN 202211137330**

(71) Applicant: **Beijing Youzhuju Network Technology
Co., Ltd.
Beijing 101299 (CN)**

(72) Inventors:
• ZHANG, Xi
  Beijing 100028 (CN)
• FAN, Jiajia
  Beijing 100028 (CN)
• SUN, Binhui
  Beijing 100028 (CN)

(74) Representative: **Dentons UK and Middle East LLP
One Fleet Place
London EC4M 7WS (GB)**

(54) **INFORMATION PRESENTATION METHOD AND APPARATUS, AND ELECTRONIC DEVICE AND COMPUTER-READABLE MEDIUM**

(57) Disclosed in the present application are an information presentation method and apparatus, and an electronic device and a computer-readable medium. The method comprises: when a client is presently presenting an object presentation page and the object presentation page comprises a first information presentation area, after the client receives a selection operation for a target object in the first information presentation area, if it is determined, according to resource value representation data of the target object and description information of a discount to be used, that a preset presentation condition is met, displaying a second information presentation area in the object presentation page, so that after the client receives a trigger operation for an add-on object, which is to be used, in the second information presentation area, said add-on object is added to the first information presentation area for presentation, and said add-on object is then in a selected state in the first information presentation area. In this way, an object adding-on process can be simplified, such that the add-on efficiency of a user can be improved, and the purchase experience of the user with regard to an object can thus be improved.

Fig. 1

## Description

This application claims priority to Chinese Patent Application No. 202211137330.6, entitled "Information presentation method and apparatus, electronic device, and computer readable medium", filed to China Patent Office on September 19, 2022, the entire contents of which are incorporated herein by reference.

TECHNICAL FIELD

The present disclosure relates to the field of Internet technology, and more particularly to an information presentation method and apparatus, an electronic device, and a computer-readable medium.

BACKGROUND

With the development of Internet technology, the online shopping has become a common way to purchase objects.

In some online shopping scenarios (e.g., shopping from a live streaming room or a virtual store, etc.), the user may add some objects to a shopping cart so that the objects the user wants to purchase can subsequently be selected from the shopping cart.

However, because of defects in the information presentation scheme used by some shopping carts, the user has poor object purchase experience in these shopping carts.

SUMMARY

In order to solve the above-mentioned technical problem, the present disclosure provides an information presentation method and apparatus, an electronic device, and a computer-readable medium, to improve the object purchase experience of users.

In order to achive the above purpose, technical solutions provided by the present disclosure are as follows.

The present disclosure provides an information presentation method, the method comprises:

presenting an object presentation page, in which the object presentation page comprises a first information presentation region;
after receiving a selection operation for a target object in the first information presentation region, when it is determined that a preset presentation condition is reached according to resource value characterization data of the target object and description information of a discount to be used, presenting a second information presentation region in the object presentation page; in which the second information presentation region comprises an add-on object to be used; resource value characterization data of the add-on object to be used satisfies a resource condition to be used; the resource condition to be used is determined according to the resource value characterization data of the target object and the description information of the discount to be used; and
adding the add-on object to be used to the first information presentation region for presentation in response to a trigger operation for the add-on object to be used, in which the add-on object to be used is in a selected state within the first information presentation region.

In a possible implementation, the adding the add-on object to be used to the first information presentation region for presentation in response to a trigger operation for the add-on object to be used comprises:
in response to the trigger operation for the add-on object to be used, adding the add-on object to be used to the first information presentation region for presentation, and canceling the presenting of the second information presentation region in the object presentation page.

In a possible implementation, the object presentation page further comprises a third information presentation region; the adding the add-on object to be used to the first information presentation region for presentation in response to the trigger operation for the add-on object to be used comprises:
in response to the trigger operation for the add-on object to be used, adding the add-on object to be used to the first information presentation region for presentation and updating a presentation content of the third information presentation region; in which the presentation content comprises a target resource value; and the target resource value is updated according to the resource value characterization data of the target object, the resource value characterization data of the add-on object to be used, and the description information of the discount to be used.

In a possible implementation, the adding the add-on object to be used to the first information presentation region for presentation in response to a trigger operation for the add-on object to be used comprises:

in response to the trigger operation for the add-on object to be used, adding the add-on object to be used to the first information presentation region for presentation, and presenting first prompt information on the object presentation page; in which the first prompt information is used for prompting that a sum value of the resource value characterization data of the target object and the resource value characterization data of the add-on object to be used has reached a discount threshold resource value in the description information of the discount to be used and/or resource discount description content in the description information of the discount to be used; and
when a preset disappearance condition is satisfied, canceling the presenting of the first prompt information on the object presentation page.

In a possible implementation, the second information presentation region further comprises a first control corresponding to the add-on object to be used;

the adding the add-on object to be used to the first information presentation region for presentation in response to the trigger operation for the add-on object to be used comprises:
in response to a trigger operation for the first control corresponding to the add-on object to be used, adding the add-on object to be used to the first information presentation region for presentation.

In a possible implementation, the second information presentation region comprises at least one candidate add-on object; the candidate add-on object is determined according to the resource value characterization data of the target object and the description information of the discount to be used; and the at least one candidate add-on object comprises the add-on object to be used.

In a possible implementation, the second information presentation region further comprises a second control; and
after presenting the second information presentation region in the object presentation page, the method further comprises:

in response to a trigger operation for the second control, presenting an add-on object aggregation page on the object presentation page; in which the add-on object aggregation page comprises at least one candidate add-on object; the at least one candidate add-on object comprises the add-on object to be used; and
in response to a selection operation for a target add-on object in the at least one candidate add-on object, canceling the presenting of the add-on object aggregation page on the object presentation page, canceling the presenting of the second information presentation region on the object presentation page, and adding the target add-on object to the first information presentation region for presentation; and the target add-on object is in a selected state within the first information presentation region.

In a possible implementation, historical operation information of the add-on object to be used satisfies a first information condition; the first information condition is that the historical operation information indicates that a total number of operations on the add-on object to be used reaches a preset number of times threshold; or interaction description information of the add-on object to be used satisfies a second information condition; and the second information condition is that the interaction description information indicates that a ratio of a total number of times of ordering operations for the add-on object to be used to a total number of times of operations for the add-on object to be used reaches a preset ratio threshold.

In a possible implementation, the object presentation page further comprises a third control; and after the adding the add-on object to be used to the first information presentation region for presentation, the method further comprises:
generating and presenting an object order in response to a trigger operation for the third control.

In a possible implementation, the object presentation page is a page to be ordered; and the first information presentation region is used for presenting at least one object to be ordered.

The present disclosure further provides an information presentation apparatus, which comprises:

a first presentation unit, configured to present an object presentation page, in wihch the object presentation page comprises a first information presentation region;
a first determination unit, configured to, after receiving a selection operation for a target object in the first information presentation region, when it is determined that a preset presentation condition is reached according to resource value characterization data of the target object and description information of a discount to be used, present a second information presentation region in the object presentation page; in which the second information presentation region comprises an add-on object to be used; resource value characterization data of the add-on object to be used satisfies a resource condition to be used; the resource condition to be used is determined according to the resource value characterization data of the target object and the description information of the discount to be used; and
a second presentation unit, configured to add the add-on object to be used to the first information presentation region for presentation in response to a trigger operation for the add-on object to be used, in which the add-on object to be used is in a selected state within the first information presentation region.

The present disclosure further provides an electronic device, the device comprises a processor and a memory; the memory is configured to store instructions or computer programs; and the processor is configured to execute the instructions or computer programs in the memory to cause the electronic device to perform the information presentation method provided by the present disclosure.

The present disclosure further provides a computer-readable medium, the computer-readable medium stores instructions or computer programs, when the instructions or computer programs run on a device, the device is caused to perform the information presentation method provided by the present disclosure.

The present disclosure further provides a computer program product, which comprises a computer program carried on a non-transitory computer readable medium, the computer program comprises program codes for performing the information presentation method provided by the present disclosure.

Compared with the prior art, the present disclosure has at least the following advantages.

In the technical solutions provided by the present disclosure, for a client used by a certain user, when the client is presenting an object presentation page (for example, a shopping cart page) and the object presentation page includes a first information presentation region (namely, a presentation region of at least one object to be ordered), after the client receives a selection operation for a target object in the first information presentation region, when it is determined that a preset presentation condition is reached according to resource value characterization data of the target object and description information of the discount to be used, it can be determined that the resource value characterization data of the target object does not reach a discount threshold resource value carried by the description information of the discount to be used. Thus, a second information presentation region is presented in the object presentation page, and the second information presentation region can provide one or more add-on objects. After the client receives a trigger operation for the add-on object to be used in the second information presentation region, the add-on object to be used is added to the first information presentation region for presentation, so that the add-on object to be used is in a selected state in the first information presentation region, thereby enabling the sum of resource value characterization data of two objects in the selected state within the first information presentation region to reach the discount threshold resource value carried by the description information of the discount to be used, thereby enabling the subsequent use of the description information of the discount to be used to participate in an ordering process for the two objects. Thus, an object adding-on process can be effectively simplified, so that the user can determine an add-on object in the shortest possible time, thereby effectively improving the add-on efficiency for the user, and effectively improving the object purchase experience (in particular, an object add-on experience) of the user.

In addition, because the resource value characterization data of the add-on object to be used satisfies the resource condition to be used, and the resource condition to be used is determined according to the resource value characterization data of the target object and the description information of the discount to be used, the sum value of the resource value characterization data of the add-on object to be used and the resource value characterization data of the target object can satisfy the discount threshold resource value carried by the description information of the discount to be used, so that the user can use the resource discount policy described by the description information of the discount to be used when the user simultaneously selects the add-on object to be used and the target object. This enables the user to purchase as many objects as possible with as smaller resource value as possible, which is advantageous to improve the user's object purchase experience.

BRIEF DESCRIPTION OF DRAWINGS

In order to more clearly describe technical solutions of the embodiments of the disclosure or the prior art, the drawings to be used in the description of the embodiments or the prior art will be briefly introduced below. It will be apparent to those skilled in the art that the drawings in the following description are only some of the disclosure, and other drawings may be obtained from these drawings without any creative work.

Fig. 1 is a flowchart of an information presentation method provided by an embodiment of the present disclosure;
Fig. 2 is a schematic diagram of an object presentation page provided by an embodiment of the present disclosure;
Fig. 3 is a schematic diagram of an object presentation page provided by an embodiment of the present disclosure;
Fig. 4 is a schematic diagram of an object presentation page provided by an embodiment of the present disclosure;
Fig. 5 is a schematic diagram of an object presentation page provided by an embodiment of the present disclosure;
Fig. 6 is a schematic diagram of an object presentation page provided by an embodiment of the present disclosure;
Fig. 7 is a schematic diagram of an object presentation page provided by an embodiment of the present disclosure;
Fig. 8 is a schematic diagram of an object presentation page provided by an embodiment of the present disclosure;
Fig. 9 is a schematic diagram of a live video page provided by an embodiment of the present disclosure;
Fig. 10 is a schematic diagram of an object presentation page provided by an embodiment of the present disclosure;
Fig. 11 is a schematic diagram of an object presentation page provided by an embodiment of the present disclosure;
Fig. 12 is a schematic diagram of an object presentation page provided by an embodiment of the present disclosure;
Fig. 13 is a structural schematic diagram of an information presentation apparatus according to an embodiment of the present disclosure; and

Fig. 14 is a structural schematic diagram of an electronic device according to an embodiment of the present disclosure.

DETAILED DESCRIPTION

It has been found that in some online shopping scenarios (e.g., shopping from a live streaming room or a virtual store, etc.), after a user adds some objects (e.g., commodities) to a shopping cart, the user may enter a shopping cart page to select one or more of these objects for placing an order. In addition, in some information presentation schemes used for the shopping cart page, the shopping cart page generally only presents some of the objects added to the shopping cart by the user so that the user can only view the objects added to the shopping cart by the user from the shopping cart page.

It has also been found that, in some cases, it may occur that the price of these selected objects does not meet the threshold corresponding to a certain discount policy (e.g., a discount with 50 Yuan subtracted from the total price reaching 500 Yuan). In this case, with regard to the information presentation scheme shown in the above paragraph, in order to better enjoy the discount policy, the user needs to leave the shopping cart page first, and then resort to some page operation behaviors (e.g., a page opening operation, a page browsing operation, etc.) to achieve the purpose of screening out some other commodities from a large number of commodities for the add-on operation, which results in that the user needs to perform a large number of operations to achieve the add-on operation, thereby resulting in that the adding-on process of the user is relatively complicated, and further resulting in that the add-on experience of the user is relatively poor.

Based on the above-mentioned discovery, in order to better solve the technical problem shown in the background section, embodiments of the present disclosure provide an information presentation method. In the method, for a client used by a certain user, when the client is presenting an object presentation page (for example, a shopping cart page) and the object presentation page includes a first information presentation region (namely, a presentation region of at least one object to be ordered), after the client receives a selection operation for a target object in the first information presentation region, when it is determined that a preset presentation condition is reached according to resource value characterization data of the target object and description information of the discount to be used, it can be determined that the resource value characterization data of the target object does not reach a discount threshold resource value carried by the description information of the discount to be used. Thus, a second information presentation region is presented in the object presentation page, and the second information presentation region can provide one or more add-on objects. After the client receives a trigger operation for the add-on object to be used in the second information presentation region, the add-on object to be used is added to the first information presentation region for presentation, so that the add-on object to be used is in a selected state in the first information presentation region, thereby enabling the sum of resource value characterization data of two objects in the selected state within the first information presentation region to reach the discount threshold resource value carried by the description information of the discount to be used, thereby enabling the subsequent use of the description information of the discount to be used to participate in an ordering process for the two objects. Thus, an object adding-on process can be effectively simplified, so that the user can determine an add-on object in the shortest possible time, thereby effectively improving the add-on efficiency for the user, and effectively improving the object purchase experience (in particular, an object add-on experience) of the user.

In addition, because the resource value characterization data of the add-on object to be used satisfies the resource condition to be used, and the resource condition to be used is determined according to the resource value characterization data of the target object and the description information of the discount to be used, the sum value of the resource value characterization data of the add-on object to be used and the resource value characterization data of the target object can satisfy the discount threshold resource value carried by the description information of the discount to be used, so that the user can use the resource discount policy described by the description information of the discount to be used when the user simultaneously selects the add-on object to be used and the target object. This enables the user to purchase as many objects as possible with as smaller resource value as possible, which is advantageous to improve the user's object purchase experience.

In addition, the embodiments of the present disclosure do not limit the execution main body of the information presentation method provided by the embodiments of the present disclosure. For example, the information presentation method provided by the embodiments of the present disclosure can be applied to a terminal device or a server. As another example, the information presentation method provided by the embodiments of the present disclosure can also be implemented by means of a data interaction process between a terminal device and a server. The terminal device may be a smart phone, a computer, a personal digital assistant (PDA), a tablet computer, etc. The server may be a standalone server, a clustered server, or a cloud server.

In order to make those skilled in the art better understand the solutions of the present disclosure, the technical solutions in the embodiments of the present disclosure will be described clearly and completely in conjunction with the accompanying drawings in the embodiments of the present disclosure. Obviously, the described embodiments are only part of the embodiments of the present disclosure, rather than all of the embodiments. Based on the embodiments in the present disclosure, all other embodiments obtained by a person skilled in the art without involving any inventive effort are within the protection scope of the present disclosure.

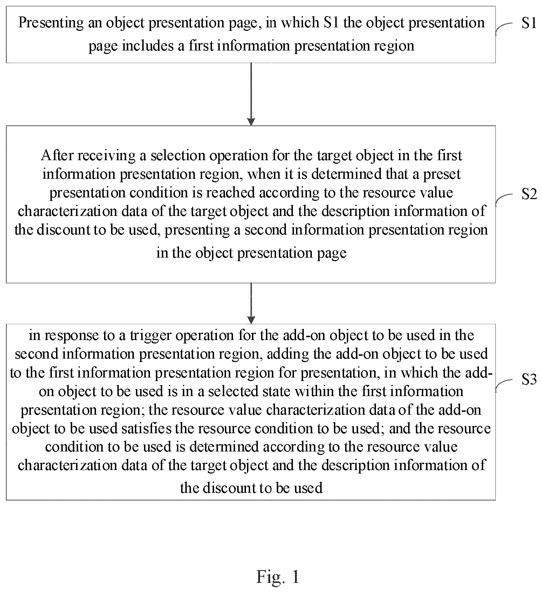

In order to better understand the technical solutions provided in the present disclosure, the information presentation method provided in the present disclosure is described below with reference to some drawings. As shown in Fig. 1, the information presentation method provided by the embodiments of the present disclosure includes the following S1-S3. Fig. 1 is a flowchart of an information presentation method provided by an embodiment of the present disclosure.

S1: presenting an object presentation page, in which the object presentation page includes a first information presentation region.

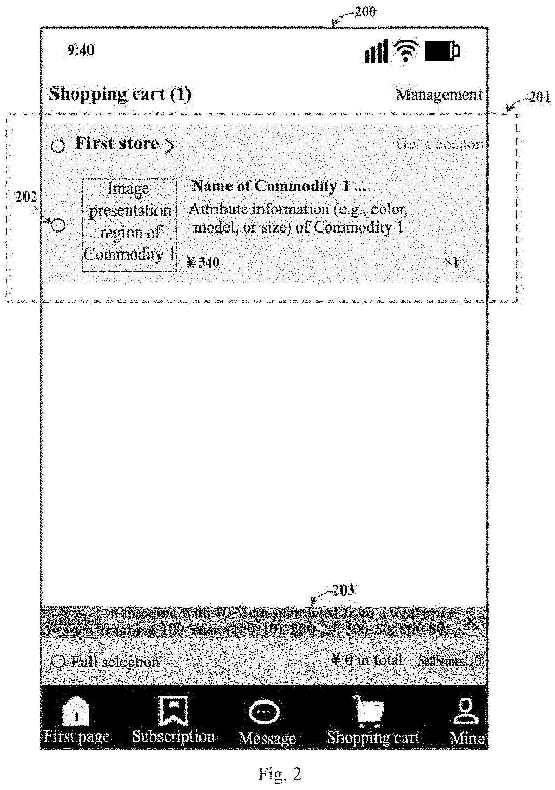

Here, the object presentation page is used for presenting some objects which have been triggered to be added into a shopping cart. Also, embodiments of the present disclosure do not define the object presentation page, which may be, for example, a page to be ordered (e.g., the page shown in Fig. 2). The operation of being added into the shopping cart is used for adding an object to the object presentation page, so that the user can subsequently implement an ordering process for the object through the object presentation page.

It should be noted that the embodiments of the present disclosure do not limit the above-mentioned object. For example, it can be a commodity that can be purchased (e.g., a cup, etc.) or a service that can be enjoyed (e.g., hair dressing, etc.).

The first information presentation region refers to a region presented in the above object presentation page for presenting objects each of which is triggered to be added into the shopping cart. For example, the first information presentation region may refer to a region 201 in Fig. 2.

In addition, embodiments of the present disclosure do not define the above first information presentation region, e.g., when the above object presentation page is a page to be ordered (e.g., the page shown in Fig. 2), the first information presentation region may be used to present at least one object to be ordered (e.g., the Commodity 1 shown in the region 201 in Fig. 2, etc.). Here, the object to be ordered refers to an object that can be ordered in the object presentation page (i.e., the object to be ordered refers to an object that is triggered to be added into the shopping cart).

Based on the above-mentioned relevant contents of S1, it can be seen that, for a client used by a target user, when the client is presenting an object presentation page (e.g., the page 200 shown in Fig. 2), the target user can view some objects to be ordered (e.g., the Commodity 1 shown in the region 201 in Fig. 2, etc.) from the first information presentation region in the object presentation page, so that the target user can subsequently select one or more objects from the objects to be ordered for ordering. Here, the target user refers to a user of the client.

S2: after receiving a selection operation for the target object in the first information presentation region, when it is determined that a preset presentation condition is reached according to the resource value characterization data of the target object and the description information of the discount to be used, presenting a second information presentation region in the object presentation page.

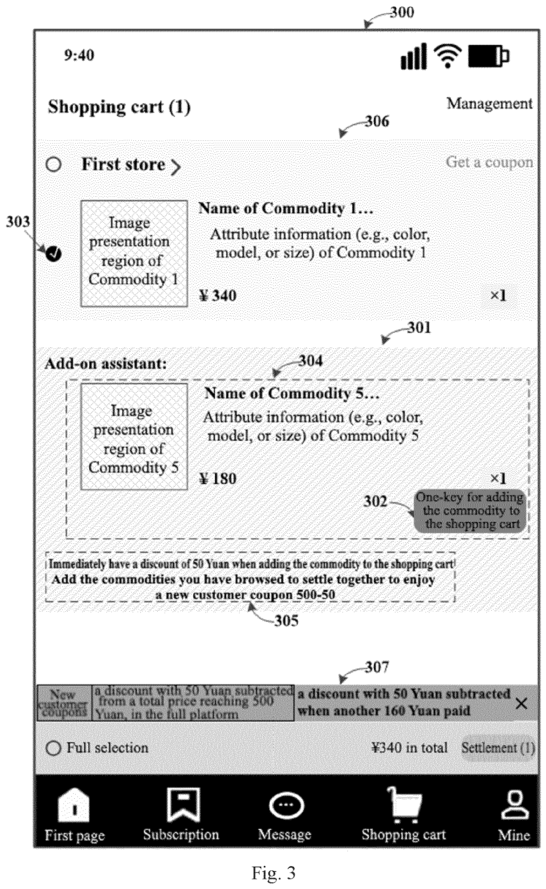

The target object refers to a selected object to be ordered presented in the above first information presentation region. For example, the target object may refer to the Commodity 1 in the selected state shown in a page 300 of Fig. 3.

In addition, the embodiments of the present disclosure do not define the above implementation of "a selection operation for the target object in the first information presentation region". For example, when the first information presentation region further includes a fourth control corresponding to the target object (for example, the control 202 in Fig. 2), the trigger operation of "a selection operation for the target object in the first information presentation region" may specifically be a click operation on the fourth control corresponding to the target object.

The above-mentioned "fourth control corresponding to the target object" is used for triggering a selection state adjustment process for the target object. Furthermore, the specific function of the "fourth control corresponding to the target object" is as follows. When the target object is in an unselected state in the first information presentation region (for example, the state of the control 202 in Fig. 2), if the fourth control is clicked, the target object may be adjusted from the unselected state to the selected state in the first information presentation region (for example, the state of the control 303 in Fig. 3). However, when the target object is in the selected state in the first information presentation region (e.g., the state of control 303 in Fig. 3), if the fourth control is clicked, the target object may be adjusted from the selected state to the unselected state in the first information presentation region (e.g., the state of control 202 in Fig. 2). In addition, the embodiments of the present disclosure do not define the "fourth control corresponding to the target object", which may be, for example, the control 202 in Fig. 2.

The above "resource value characterization data of the target object" refers to a resource that needs to be consumed when a transaction is made for the target object, so that the "resource value characterization data of the target object" can represent a value that the target object has. For example, when the target object is the Commodity 1 shown in the region 306 of Fig. 3, the resource value characterization data for the target object may be a character string "¥340" shown in the region 306.

The above "description information of the discount to be used" is used to describe a resource discount policy which can be used for the above-mentioned target object. Furthermore, the embodiments of the present disclosure do not limit the description information of the discount to be used. For example, it may be any one of pre-established resource discount policies associated with the target object (e.g., a new customer coupon shown in the region 203 in Fig. 2 or a new customer coupon shown in the region 307 in Fig. 3).

In addition, embodiments of the present disclosure do not limit the above "description information of the discount to be used", e.g., when the description information of the discount to be used is used to describe a target discount policy (e.g., the discount policy "a discount with 50 Yuan subtracted from a total price reaching 500 Yuan" shown in region 307 of Fig. 3), the description information of the discount to be used carries the discount threshold resource value of the target discount policy (e.g., the threshold value "500" shown in the region 307 of Fig. 3) and the resource discount description content of the target discount policy (e.g., the content "50 Yuan subtracted" shown in the region 307 of Fig. 3). Here, the target discount policy refers to a resource discount policy described by the description information of the discount to be used. The discount threshold resource value refers to a threshold value involved in the target discount policy. The resource discount description content is used to describe the deduction information (or discount information) involved in the target discount policy.

The above "preset presentation condition" refers to a trigger condition for the presentation process of the above-mentioned second information presentation region. Furthermore, the embodiments of the present disclosure do not define the preset presentation condition. For example, the preset presentation condition may specifically be the resource discount policy described by the description information of the discount to be used that may be used for the target object, and the resource value characterization data of the target object is lower than the discount threshold resource value in the description information of the discount to be used (e.g., the threshold value "500" shown in the region 307 of Fig. 3).

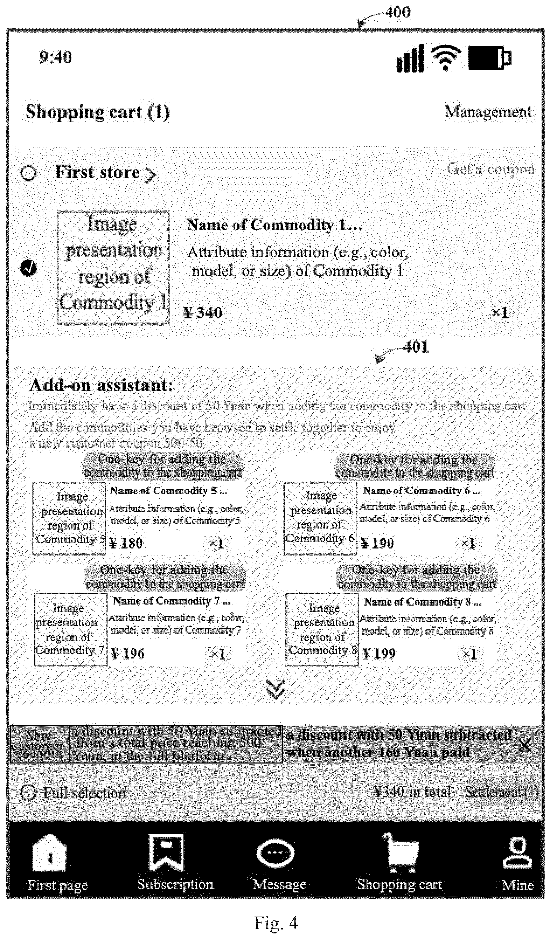

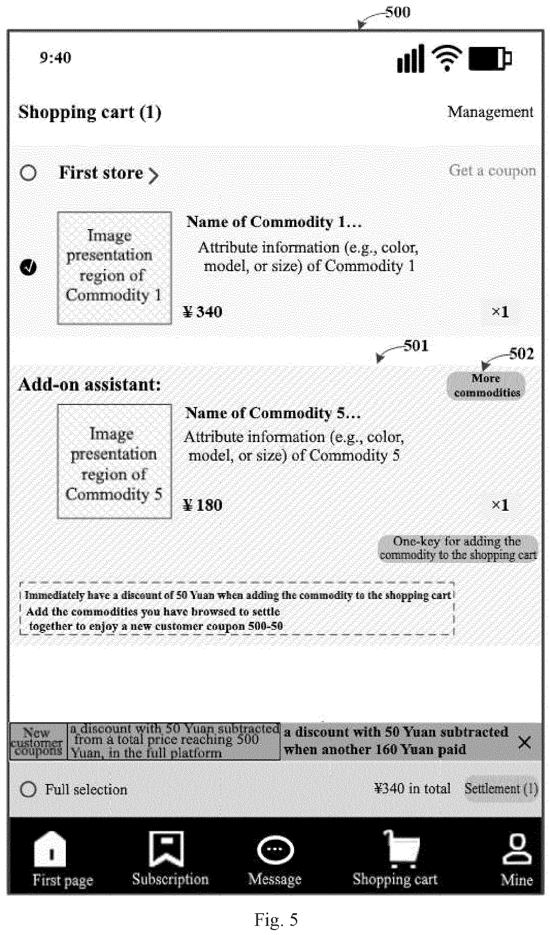

The "second information presentation region" above is used to present some of the objects provided for the target object (e.g., the Commodity 5 shown in the region 301 in Fig. 3) that may be used for adding on. For example, the second information presentation region may be the region 301 in Fig. 3, the region 401 in Fig. 4 or the region 501 in Fig. 5.

In addition, the embodiments of the present disclosure do not limit the implementation of the above second information presentation region. For better understanding, the following three cases are used for description.

Case 1, in some application scenarios, the second information presentation region above (e.g., the region 301 in Fig. 3) may include only one object that can be used for adding on.

Based on the case 1, in a possible implementation, the above second information presentation region may be used to present a first object, so that the user can subsequently use the first object for adding on with respect to the above target object. Here, the first object refers to an object which is presented in the second information presentation region and can be added on for the above target object. For example, the first object may be the Commodity 5 in Fig. 3.

In addition, the embodiments of the present disclosure do not limit the determination process of the above first object. For example, the process may specifically include the following steps 11-13.

Step 11: according to the above resource value characterization data of the target object and the above description information of the discount to be used, determining a screening condition of the add-on object.

Here, the screening condition of the add-on object is used for screening an object that can be added on for the target object under the above description information of the discount to be used. Furthermore, the embodiments of the present disclosure do not define the resource condition to be used. For example, the resource condition to be used may specifically be that the resource value characterization data is not less than the difference between the discount threshold resource value in the discount description information to be used and the resource value characterization data of the target object.

In addition, the embodiments of the present disclosure do not define the implementation of the step 11 above. For example, specifically, based on the difference between the discount threshold resource value in the description information of the discount to be used and the resource value characterization data of the target object, the screening condition of the add-on object is generated such that the resource value characterization data of the object satisfying the add-on object screening condition is not lower than the difference.

Step 12: screening at least one candidate add-on object satisfying the above screening condition of the add-on object from at least one object to be referenced.

The object to be referenced refers to an object that needs to be referenced when the add-on object screening is performed for the target object.

In addition, the embodiments of the present disclosure do not limit the above "at least one object to be referenced", which may include, for example, all commodities involved in an application (e.g., some shopping application, etc.) for providing the page 200 in Fig. 2.

In fact, in order to better improve the user experience, the above "at least one object to be referenced" may be determined by using commodities that the user may like and highly converted commodities. Based on this, the embodiments of the present disclosure also provide a possible implementation of the above object to be referenced, in which historical operation information of the object to be referenced satisfies a first information condition, or the interaction description information of the add-on object to be used satisfies a second information condition.

The above "historical operation information of the object to be referenced" is used to describe operation behaviors (e.g., a click operation, a browsing operation, a collection operation, a sharing operation, etc.) that the target user has triggered for the object to be referenced.

The above "first information condition" is used to represent a condition satisfied by an object that the above target user may like. The first information condition may be set in advance. For example, the first information condition may be that the above-mentioned "historical operation information of the object to be referenced" indicates that the number of times the target user has triggered operations on the object to be referenced reaches a preset number of times threshold. Here, the preset number of times threshold may be preset.

The above "interaction description information of the add-on object to be used" is used to describe some interaction operations (e.g., an order operation, a click operation, a browsing operation, a collection operation, a sharing operation, etc.) which have been triggered by the network-wide users for the object to be referenced. Here, the network-wide users mean all users who can see the object to be referenced.

The above "second information condition" is used to indicate the condition satisfied by the highly converted object. The second information condition may be set in advance. For example, the second information condition may be that the above "interaction description information of the object to be referenced" indicates that the ratio of the number of times of ordering operations of network-wide users for the object to be referenced to the number of times of operations of the network-wide users for the object to be referenced reaches a preset ratio threshold. Here, the number of times of the ordering operations is used to describe the purchase number of the network-wide users for the object to be referenced. The preset ratio threshold may be preset.

Based on the above five paragraphs, in one possible implementation, the above "at least one object to be referenced" may include at least one second object and/or at least one third object. Here, the second object refers to an object that a target user may like. Also, the historical operation information of the second object satisfies the above first information condition. The third object refers to a highly converted object. Furthermore, the interaction description information of the third object satisfies the above second information condition. It should be noted that in some application scenarios, the second objects may have a higher recommendation priority than the third objects, i.e. the second objects may be recommended to the above target user preferentially, so that the third objects may be recommended to the above target user when it is determined that the second objects are not present.

The above "candidate add-on object" refers to an object to be referenced satisfying the screening condition of the add-on object. Furthermore, the embodiments of the present disclosure do not define the determination process of the candidate add-on object. For example, specifically, according to resource value characterization data of an $i^{th}$ object to be referenced, it is judged whether the $i^{th}$ object to be referenced satisfies the screening condition of the add-on object; if so, the $i^{th}$ object to be referenced is determined as a candidate add-on object; and if not, it is discarded. Here, i is a positive integer, $i \leq I$. I is a positive integer, and I represents the number of objects in the above "at least one object to be referenced".

Step 13: determining a first object from at least one candidate add-on object according to a predetermined screening rule.

Here, the pre-set screening rule can be pre-set. For example, specifically, the rule may be that the object with the smallest resource value characterization data is selected from the above "at least one candidate add-on object". As another example, specifically, the rule may be that the object with the highest recommendation score is selected from the above "at least one candidate add-on object". The recommendation score is used for indicating the possibility that a candidate add-on object is recommended to the user. Furthermore, the embodiments of the present disclosure do not define the determination process of the recommendation score. For example, the determination process of the recommendation score may specifically be that the recommendation score of the candidate add-on object is obtained by performing weighted summation on the resource value characterization data of the candidate add-on object and the user like-degree characterization data of the candidate add-on object. The user like-degree characterization data is used for indicating the above like-degree of the target user for the candidate add-on object. Furthermore, the embodiments of the present disclosure do not define the user like-degree characterization data. For example, the user like-degree characterization data may be the number of operations triggered by the target user for the candidate add-on object.

Based on the above-mentioned relevant contents of steps 11 to 13, it can be seen that after a target object is acquired, a first object corresponding to the target object may be determined according to the resource value characterization data of the target object and the above-mentioned description information of the discount to be used, so that a sum value of the resource value characterization data of the first object and the resource value characterization data of the target object can reach the discount threshold resource value in the description information of the discount to be used, and the first object can be subsequently recommended and displayed to a user as an add-on object for the target object.

Based on the relevant contents of the case 1 above, it can be seen that, in some application scenarios, for a client used by the target user, when the client is presenting an object presentation page (e.g., the page 200 shown in Fig. 2), after the client receives a selection operation for the target object in the first information presentation region on the presentation object presentation page, a second information presentation region (e.g., a region 301 shown in Fig. 3) may be presented in the object presentation page (e.g., a page 300 shown in Fig. 3), and the second information presentation region presents the above first object (e.g., the Commodity 5 shown in the region 301 in Fig. 3), so that the target user can subsequently use the first object to perform an adding-on process on the target object, and the target user can enjoy the resource discount policy described above in the description information of the discount to be used (for example, the discount policy of "a discount with 50 Yuan subtracted from a total price reaching 500 Yuan" shown in the region 307 in Fig. 3).

Case 2, in some application scenarios, in order to better improve the user experience, the above second information presentation region (e.g., the region 401 in Fig. 4) may include a plurality of objects that are used for adding on, so that the user can subsequently select a certain object which he most want to purchase from the plurality of objects.

Based on the case 2, it can be seen that in a possible implementation, the above second information presentation region may include at least one candidate add-on object, so that the user can subsequently select an object from these candidate add-on objects to add on for the above target object. Here, the candidate add-on object is determined according to the above resource value characterization data of the target object and the above description information of the discount to be used. The embodiments of the present disclosure do not define the determination process of the candidate add-on object, for example, it can be implemented using the above steps 11-12.

Based on the above-mentioned relevant contents of case 2, it can be seen that in some application scenarios, for a client used by the target user, when the client is presenting an object presentation page (e.g., the page 200 shown in Fig. 2), after the client receives a selection operation for the target object in the first information presentation region on the object presentation page, a second information presentation region (e.g., the region 401 shown in Fig. 4) may be presented in the object presentation page (e.g., the page 400 shown in Fig. 4), and at least one candidate add-on object (e.g., a Commodity 5, a Commodity 6, a Commodity 7, a Commodity 8. etc. shown in the region 401 in Fig. 4) may be presented in the second information presentation region, so that the target user can subsequently select an object which the target user most wants to purchase from the candidate add-on objects, and perform adding-on processing on the target object. Thus, the target user can enjoy the resource discount policy described above by the description information of the discount to be used, thus effectively improving the adding-on experience of the target user.

Case 3, in some application scenarios, in order to be able to reduce the size of the above second information presentation region as much as possible, only one object (e.g., a Commodity 5 shown in the region 501 of Fig. 5) that can be used for adding on may be presented in the second information presentation region (e.g., the region 501 of Fig. 5), and the user may view more objects that can be used for adding on with a certain control (e.g., the control 502 of Fig. 5) in the second information presentation region.

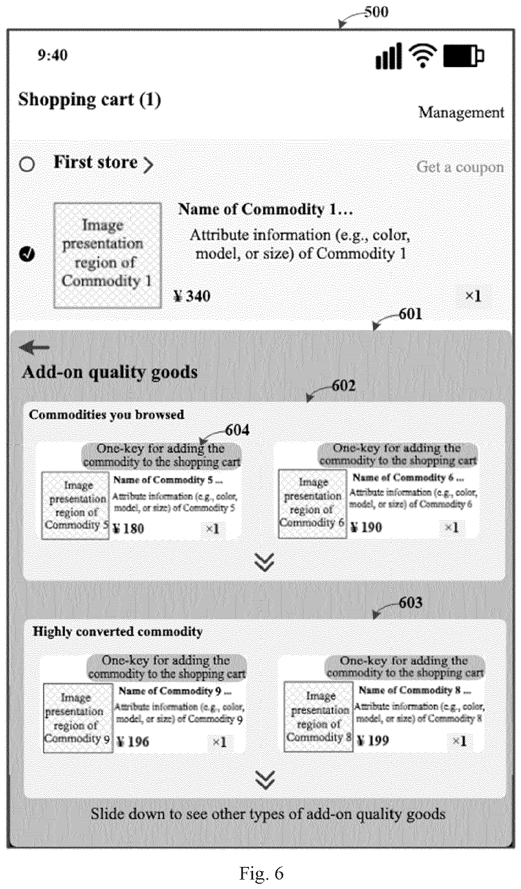

Based on the case 3, it can be seen that in a possible implementation, the above second information presentation region may present a first object and a second control, so that the user can not only directly use the first object to perform an adding-on process for the above target object, but also first view at least one candidate add-on object (for example, a Commodity 5, a Commodity 6, a Commodity 8, a Commodity 9, etc. shown on the page 602 in Fig. 6) through the second control, and then select an object from the candidate add-on objects to perform the adding-on process. It should be noted that the relevant content of the "at least one candidate add-on object" is described above.

Here, the second control means a control which is presented in the above-mentioned second information presentation region and can trigger a presentation flow of at least one candidate add-on object corresponding to the target object. For example, the second control may be a control 502 in Fig. 5.

In addition, the embodiments of the present disclosure do not limit the operation principles of the second control above. For example, it may be implemented using the operation principles shown in steps 21-22 below.

Based on the above-mentioned relevant contents of case 3, it can be seen that, in some application scenarios, for a client used by the target user, when the client is presenting an object presentation page (e.g., the page 200 shown in Fig. 2), after the client receives a selection operation for the target object in the first information presentation region on the object presentation page, a second information presentation region (e.g., a region 501 shown in Fig. 5) may be presented on the object presentation page (e.g., a page 500 shown in Fig. 5), and the second information presentation region presents the above first object (e.g., a Commodity 5 shown in an region 501 in Fig. 5) and a second control (e.g., a control 502 in Fig. 5), so that the target user can not only perform an adding-on process for the target object using the first object, but also firstly view at least one candidate add-on object (e.g., some commodities shown on a page 601 in Fig. 6, etc.) through the second control, and then select an object which he most wants to purchase from the candidate add-on objects, and perform an adding-on process for the target object, so that the target user can enjoy the resource discount policy described above by the description information of the discount to be used.

This makes it possible to effectively improve the user's add-on experience without increasing the size of the second information presentation region.

Based on the above-mentioned relevant contents of S2, it can be seen that, for a client used by the target user, when the client is presenting an object presentation page (for example, the page 200 shown in Fig. 2), after the client receives a selection operation for a target object in the first information presentation region on the object presentation page, if it is determined that a preset presentation condition has been reached according to the resource value characterization data of the target object and the description information of the discount to be used, a second information presentation region (for example, the region 301 in Fig. 3, the region 401 in Fig. 4 and the region 501 in Fig. 5) may be presented on the object presentation page by the client, so that the second information presentation region can provide the target user with one or more objects which can be added on for the target object, and the target user can subsequently select an object from the second information presentation region to make the adding-on process for the target object. Thus, the target user can enjoy the resource discount policy described above by the description information of the discount to be used, so that the purpose of selecting an add-on object without leaving the object presentation page can be achieved, which is advantageous for improving the user experience.

S3: in response to a trigger operation for the add-on object to be used in the second information presentation region, adding the add-on object to be used to the first information presentation region for presentation, in which the add-on object to be used is in a selected state within the first information presentation region; the resource value characterization data of the add-on object to be used satisfies the resource condition to be used; and the resource condition to be used is determined according to the resource value characterization data of the target object and the description information of the discount to be used.

Here, the add-on object to be used refers to a selected object presented in the above second information presentation region. For example, the add-on object to be used may refer to a Commodity 5 shown in the region 301 in Fig. 3, a Commodity 5 shown in the region 401 in Fig. 4, or a Commodity 5 shown in the region 501 in Fig. 5.

In addition, the resource value characterization data of the add-on object to be used above satisfies the resource condition to be used. Here, the resource condition to be used refers to a condition satisfied by an object presented in the above second information presentation region, and the embodiments of the present disclosure do not define the resource condition to be used. For example, the resource condition to be used may be a condition satisfied by the candidate add-on object shown in step 11-step 12 above. As another example, the resource condition to be used may be a condition satisfied by the first object shown in steps 11-13 above.

It can be seen that, in one possible implementation, the above resource condition to be used may be determined according to the above resource value characterization data of the target object and the above description information of the discount to be used, such that the resource condition to be used can be used for screening objects for presenting in the above second information presentation region (e.g., the above first object or the above at least one candidate add-on object), so that the user can subsequently perform adding-on using the objects presented in the second information presentation region.

In addition, in order to better improve the user experience, the embodiments of the present disclosure also provide another possible implementation of the above-mentioned add-on object to be used, in which the historical operation information of the add-on object to be used satisfies the above-mentioned first information condition; and/or the interaction description information of the add-on object to be used satisfies the above second information condition. That is, the number of operations of the target user for the add-on object to be used reaches a preset number threshold, and/or the ratio of the number of order operations of the network-wide users for the add-on object to be used to the number of operations of the network-wide users for the add-on object to be used reaches a preset ratio threshold. It can be seen that the add-on object to be used may be a commodity that may be liked by the target user or a highly converted commodity.

Also, the embodiments of the present disclosure do not define the implementation of "a trigger operation for an add-on object to be used in the second information presentation region" in S3 above. For the sake of understanding, the following will take one possible implementation of S3 as an example for illustration.

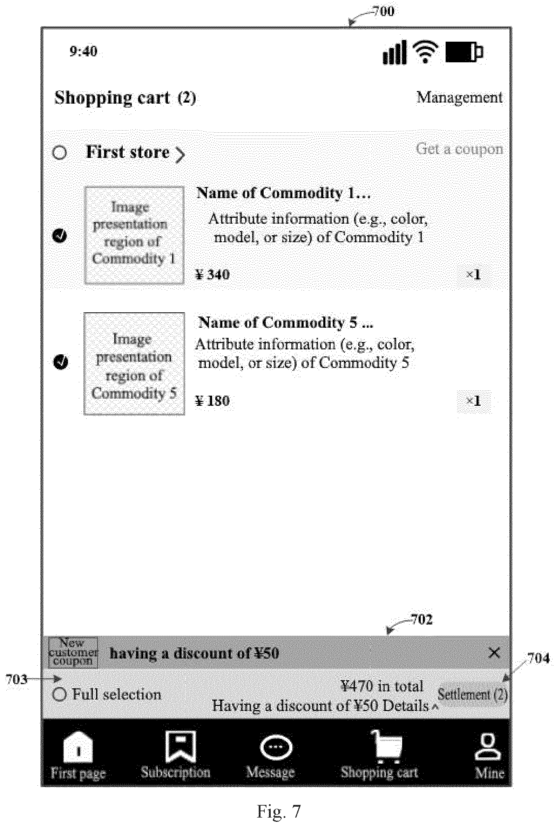

In a possible implementation, when the above-mentioned add-on object to be used and the first control (for example, the control 302 in Fig. 3) corresponding to the add-on object to be used are presented in the above-mentioned second information presentation region, the above-mentioned S3 may specifically be that, in response to a trigger operation (e.g., a click operation) on the first control corresponding to the add-on object to be used, adding the add-on object to be used to the above first information presentation region for presentation, so that the add-on object to be used is in a selected state (e.g., the state in which the Commodity 5 is in Fig. 7) within the first information presentation region. Here, the "first control corresponding to the add-on object to be used" is used for triggering the selection process for the add-on object to be used. Furthermore, the embodiments of the present disclosure do not define the "first control corresponding to the add-on object to be used". For example, it can specifically be the control 302 in Fig. 3.

Based on the content of the above paragraph, it can be seen that in a possible implementation, when the above-mentioned add-on object to be used and the first control (for example, the control 302 in Fig. 3) corresponding to the add-on object to be used are presented in the above-mentioned second information presentation region, the above-mentioned "trigger operation for the add-on object to be used in the second information presentation region" in S3 can specifically include a trigger operation (e.g., a click operation) on the first control corresponding to the add-on object to be used.

In fact, in order to better improve the user experience, the embodiments of the present disclosure also provide a possible implementation of the above S3. In this implementation, the S3 specifically include: in response to the trigger operation for the add-on object to be used above, adding the add-on object to be used to the first information presentation region for presentation, and canceling the presenting of the second information presentation region in the object presentation page.

It can be seen that in some application scenarios, for a client used by the target user, when the client is presenting an object presentation page and a second information presentation region is presented in the object presentation page, after the client receives a trigger operation for an add-on object to be used in the second information presentation region, not only the add-on object to be used may be added to the first information presentation region for presentation so that the add-on object to be used is in a selected state in the first information presentation region, but also the presentation of the second information presentation region can be canceled in the object presentation page so that the second information presentation region is not present in the object presentation page, which effectively avoids adverse effects caused by the second information presentation region occupying some of the page space in the object presentation page, thereby facilitating the target user to better view the relevant content of the object in the selected state from the object presentation page (e.g., a page 700 shown in Fig. 7), and improving the user experience.

In fact, in order to better improve the user experience, the embodiments of the present disclosure also provide a possible implementation of the above S3. In the implementation, when the above object presentation page (e.g., the page 700 shown in Fig. 7) also includes a third information presentation region (e.g., the region 702 and/or the region 703 in Fig. 7), the above S3 may specifically include: in response to the trigger operation for the add-on object to be used, adding the add-on object to be used to the first information presentation region for presentation and updating the presentation content of the third information presentation region.

Here, the third information presentation region refers to a region presented in the above object presentation page for introducing the contents related to object settlement. For example, the third information presentation region may include a region 703 in Fig. 7. As another example, the third information presentation region may include a region 702 and a region 703 of Fig. 7.

In addition, the above "the presentation content of the third information presentation region" refers to the content presented within the third information presentation region. Furthermore, the embodiments of the present disclosure do not define the "the presentation content of the third information presentation region". For example, the content may include at least a target resource value (for example, the resource value of "¥470" shown in the region 703 in Fig. 7). Here, the target resource value can represent a total resource value processing result for the objects in the selected state in the above first information presentation region.

It can be seen that, when both the target object and the add-on object to be used in the above first information presentation region are in the selected state, the target resource value can be determined according to the resource value characterization data of the target object, the resource value characterization data of the add-on object to be used, and the above description information of the discount to be used (as shown in Formula (1) below), so as to obtain the total resource value processing result for the target object and the add-on object to be used (for example, the resource value of "¥470" shown in the region 703 in Fig. 7).

$$V_{all}=V_1+V_2-D \ (1)$$

In the formula, $V_{all}$ represents the processing result of total resource values for the target object and the add-on object to be used (namely, the above-mentioned target resource value). $V_1$ represents the resource value characterization data of the target object. $V_2$ represents the resource value characterization data of the add-on object to be used. D represents the resource discount description content in the description information of the discount to be used (e.g., the resource value of "¥50" shown in the region 704 of Fig. 7). The resource discount description content refers to the abatement information (or promotional information) involved in the resource discount policy described by the description information of the discount to be used.

Based on the above-mentioned five paragraphs, it can be seen that for a client used by the target user, when the client is presenting an object presentation page and the object presentation page presents a second information presentation region, after the client receives a trigger operation for an add-on object to be used in the second information presentation region, not only the add-on object to be used can be added to the first information presentation region according to a selected state for presentation, and the second information presentation region is canceled in the object presentation page, but also the presentation content of the third information presentation region in the object presentation page can be updated (for example, the presentation contents in the region 702 and the region 703 in Fig. 7), so that the presentation content of the third information presentation region can more accurately represent the processing result of total resource values for the target object and the add-on object to be used using the above-mentioned discount description information, thereby enabling the target user to more accurately learn from the third information presentation region the discounts he enjoys and the resource values to be paid when purchasing the target object and the add-on object to be used, which is beneficial to improve the user experience.

In fact, in order to better improve the user experience, the embodiments of the present disclosure also provide one possible implementation of S3 above, in which the S3 may include S31-S32 below.

S31: in response to a trigger operation on the add-on object to be used, adding the add-on object to be used to the first information presentation region for presentation, and presenting first prompt information on the object presentation page; in which the first prompt information is used for prompting that a sum value of the resource value characterization data of the target object and the resource value characterization data of the add-on object to be used has reached a discount threshold resource value in the description information of the discount to be used and/or resource discount description content in the description information of the discount to be used.

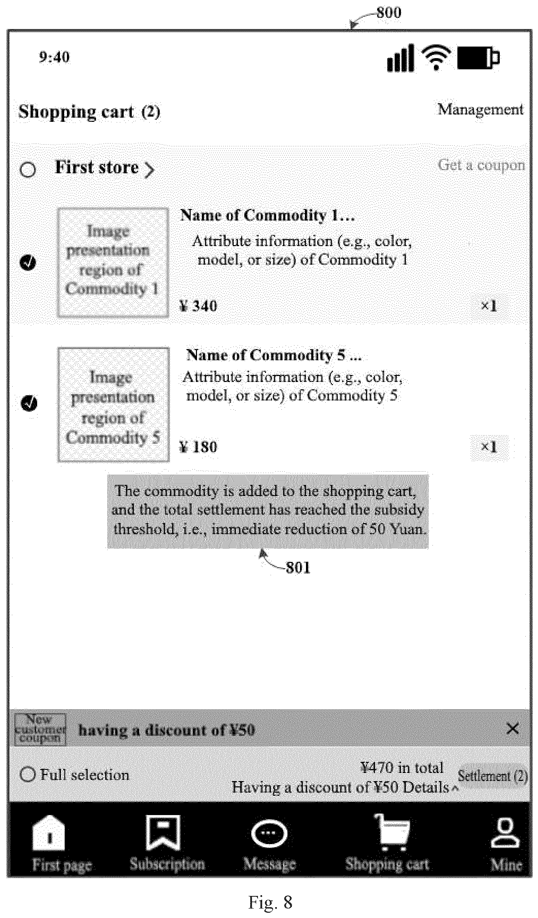

Here, the first prompt information refers to a prompt message temporarily presented on the above object presentation page, so that the first prompt information can prompt some contents (for example, the contents shown by a pop-up window 801 in Fig. 8) to the user. For example, the first prompt message may be the message shown in the pop-up window in Fig. 8.

In addition, the embodiments of the present disclosure do not define the above first prompt information. For example, the first prompt information may include at least one of a group consisting of a first content (e.g., a character string of "Added successfully" shown in the pop-up window 801 in Fig. 8), a second content (e.g., a character string of "The settlement amount has reached the subsidy threshold" shown in the pop-up window 801 in Fig. 8), and a third content (e.g., a character string of "Immediately have a discount of 50 Yuan" shown in the pop-up window 801 in Fig. 8). Here, the first content is used for prompting that the add-on object to be used has been added into the above first information presentation region according to the selected state; the second content is used for prompting that the sum value of the resource value characterization data of the above target object and the resource value characterization data of the add-on object to be used has reached the discount threshold resource value in the description information of the discount to be used; and the third content is used for prompting the resource discount description content in the discount description information to be used.

S32: when a preset disappearance condition is satisfied, canceling the the presenting of the first prompt information on the object presentation page.

Here, the preset disappearance condition may be preset. For example, it may specifically be that the first prompt information is presented for a preset duration threshold (e.g., 3 seconds).

Based on the above-mentioned relevant contents of S31 to S32, it can be seen that for a client used by the target user, when the client is displaying an object presentation page and a second information presentation region is displayed in the object presentation page, after the client receives a trigger operation for an add-on object to be used in the second information presentation region, not only the add-on object to be used may be added to the first information presentation region for presentation according to a selected state, the second information presentation region is cancelled in the object presentation page, and the presentation content of the third information presentation region is updated in the object presentation page, but also the first prompt information (for example, the information shown by the pop-up window 801 in Fig. 8) is displayed on the object presentation page (for example, the page 800 shown in Fig. 8), so that the first prompt information can provide some prompt contents (for example, the above first content, second content and third content, etc.) to the target user, and the target user can learn some situations that the target user wants to know from the first prompt information. Thus, after it is determined that the disappearance condition is satisfied, the presentation of the first prompt information is automatically cancelled on the object presentation page so as to avoid the first prompt information from blocking the object presentation page, so that the user experience can be effectively improved.

Based on the above-mentioned relevant contents of S1 to S3, it can be seen that for the information presentation method provided by the embodiments of the present disclosure, when an object presentation page (for example, the page 200 shown in Fig. 2) is being presented on a client used by the target user and the object presentation page includes the first information presentation region (for example, the region 201 in Fig. 2), after the client receives a selection operation for the target object (for example, the Commodity 1 shown in Fig. 2) in the first information presentation region, if it is determined that a preset presentation condition is reached according to the resource value characterization data of the target object and the description information of the discount to be used, it may be determined that the resource value characterization data of the target object does not reach the discount threshold resource value carried by the description information of the discount to be used. Thus, a second information presentation region is presented in the object presentation page, so that the second information presentation region can provide one or more add-on objects. After the client receives a trigger operation for the add-on object to be used in the second information presentation region, the add-on object to be used is added to the first information presentation region for presentation, and the add-on object to be used is in a selected state in the first information presentation region, so that the sum of resource value characterization data of two objects in the selected state in the first information presentation region can reach the discount threshold resource value carried by the description information of the discount to be used, thereby making it possible to subsequently use the description information of the discount to be used to participate in the order placing process for the two objects, thus effectively simplifying the object adding-on process. Thus, the target user can determine the add-on object in as short a time as possible, so that the add-on efficiency of the target user can be effectively improved, and thus the object purchase experience (in particular, the object add-on experience) of the target user can be effectively improved.

In addition, because the resource value characterization data of the add-on object to be used satisfies the resource condition to be used, and the resource condition to be used is determined according to the resource value characterization data of the target object and the description information of the discount to be used, the sum value of the resource value characterization data of the add-on object to be used and the resource value characterization data of the target object can satisfy the discount threshold resource value carried by the description information of the discount to be used, so that the target user can use the resource discount policy described by the description information of the discount to be used when the target user simultaneously selects the add-on object to be used and the target object. Thisenables the target user to purchase as many objects as possible with as smaller resource value as possible, which is advantageous to improve the target user's object purchase experience.

In fact, in some application scenarios, when not only the above-mentioned add-on object to be used (e.g., the Commodity 5 shown in the region 501 in Fig. 5) is shown within the above-mentioned second information presentation region, but also the second control (e.g., the control 502 in Fig. 5) is shown within the above-mentioned second information presentation region (e.g., the region 501 in Fig. 5), the user can not only use the add-on object to be used for adding on the order for the target object mentioned above, but also use other objects for adding on the order for the target object.

Based on this, embodiments of the present disclosure also provide one possible implementation of the above information presentation method, in which, when the above second information presentation region also includes the second control (e.g., the control 502 in Fig. 5), the information presentation method may include not only the above S1-S2, but also the below steps 21-22.

Step 21: in response to a trigger operation for the second control in the above second information presentation region, presenting an add-on object aggregation page the object presentation page; in which the add-on object aggregation page includes at least one candidate add-on object; and the at least one candidate add-on object includes the add-on object to be used.

For the relevant contents of the second control, please refer to the relevant contents of S2 above.

In addition, the embodiments of the present disclosure do not define the implementation of "a trigger operation for the second control in the second information presentation region above" in step 21 above. For example, the trigger operation may specifically be a click operation.

The above "add-on object aggregation page" is used for showing at least one candidate add-on object corresponding to the above target object. Also, the at least one candidate add-on object may include at least the add-on object to be used above. It should be noted that the relevant content of the at least one candidate add-on object is referred to the relevant content of S2 above.

In addition, embodiments of the present disclosure do not limit the above add-on object aggregation page, which may be implemented, for example, using the page 601 in Fig. 6.

Further, to better improve the user experience, the embodiments of the present disclosure also provide one possible implementation of the above add-on object aggregation page, in which the add-on object aggregation page may include at least a first aggregation presentation region (e.g., the region 602 in Fig. 6) and/or a second aggregation presentation region (e.g., the region 603 in Fig. 6). Here, the first aggregation presentation region is used for presenting the objects that the target user may like (i.e. all the candidate add-on objects whose historical operation information satisfies the first information condition). The second aggregation presentation region is used for presenting highly converted objects (i.e., all candidate add-on objects whose interaction description information satisfies the second information condition).

Also, the embodiments of the present disclosure do not limit the presenting manner of the above sheeted object aggregation page. For example, it may be displayed in a pull-down page manner as shown in Fig. 6. As another example, it may be implemented in any other presenting manner that can be used for a page that can be presented on the above object presentation page.

Based on the relevant contents of step 21 above, it can be seen that in some application scenarios, for a client used by the target user, when the client is displaying an object presentation page (for example, the page 500 shown in Fig. 5) and a second information presentation region (for example, the region 501 in Fig. 5) is displayed in the object presentation page, after the client receives a trigger operation for the second control (for example, the control 502 in Fig. 5) in the second information presentation region, an add-on object aggregation page is displayed on the object presentation page, so that the add-on object aggregation page can provide some candidate add-on objects to the target user. Thus, the target user can subsequently select an object that the target user most wants to purchase from the candidate add-on objects, and perform adding-on in an order for the target object, so that the target user can enjoy the resource discount policy described above by the description information of the discount to be used, which can effectively improve the user experience.

Step 22: in response to a selection operation on a target add-on object in the at least one candidate add-on object, canceling the presenting of the add-on object aggregation page in the object presentation page, canceling the presenting of the second information presentation region in the object presentation page, and adding the target add-on object to the first information presentation region for presentation; in which the target add-on object is in a selected state within the first information presentation region.

Here, the target add-on object refers to a selected candidate add-on object which can be displayed on the above add-on object aggregation page. Furthermore, the embodiments of the present disclosure do not define an association relationship between the target add-on object and the add-on object to be used above. For example, the two may refer to the same object (for example, the Commodity 5), or may refer to different objects. For example, when the add-on object to be used is the Commodity 5, the target order object may be the Commodity 5 shown in the region 602 in Fig. 6 or the Commodity 6 shown in the region 602 in Fig. 6.

In addition, the embodiments of the present disclosure do not define the above-mentioned implementation of "a selection operation for a target add-on object in at least one candidate add-on object". For example, when a fifth control (for example, the control 604 in Fig. 6) corresponding to the target add-on object is also presented in the above-mentioned add-on object aggregation page, the implementation of "a selection operation for a target add-on object in at least one candidate add-on object" may specifically be a trigger operation (e.g., a click operation) on the fifth control corresponding to the target add-on object. Here, the "fifth control corresponding to the target add-on object" is used for triggering a selection process for the target add-on object. Furthermore, the embodiments of the present disclosure do not define the "fifth control corresponding to the target add-on object". For example, it can be the control 604 in Fig. 6.

Based on the above-mentioned relevant contents of step 22, it can be seen that for a client used by the target user, when the client is displaying the object presentation page and an add-on object aggregation page is displayed in the object presentation page, after the client receives a selection operation for a target add-on object in the add-on object aggregation page, the add-on object aggregation page may be cancelled in the object presentation page, the second information presentation region may be cancelled in the object presentation page, and the target add-on object may be added to the first information presentation region for presentation. Thus, the add-on object to be used is in a selected state in the first information presentation region, so that the purpose of using a certain object displayed in the object presentation page to make an add-on in the order can be achieved. Thus, it is beneficial to improve the diversity of add-on selection, and thus beneficial to better improve the user experience.

In fact, in order to better improve the user experience, embodiments of the present disclosure also provide a possible implementation of the above information presentation method, in which the information presentation method may include not only all or part of the above steps, but also the following step 31. Here, the execution time of the step 31 is later than the execution time of the step S3 above or later than the execution time of the step 22 above.

Step 31: in response to a trigger operation for a third control in the object presentation page, generating and presenting an object order.

Here, the third control is used for a ordering process for the object in the selected state in the above object presentation page. Also, the embodiments of the present disclosure do not define the third control, which may be, for example, the control 704 of Fig. 7.

In addition, the embodiments of the present disclosure do not define the implementation of "a trigger operation for the third control in the object presentation page" in step 31 above. For example, it may specifically be a click operation.

The above "object order" is used for displaying the settlement situation for the object in the selected state in the above object presentation page. Furthermore, embodiments of the present disclosure do not limit the subject order. For example, it may be implemented using any of the existing or future orders.

Based on the above-mentioned relevant contents of step 31, it can be seen that for a client used by the target user, when the client is displaying an object presentation page, after the client receives a trigger operation (e.g., a click operation) on a third control in the object presentation page, an object order is generated and presented, so that the object order can display a settlement situation of the object in the selected state in the object presentation page. Thus, the target user can subsequently perform resource payment processing based on the object order.

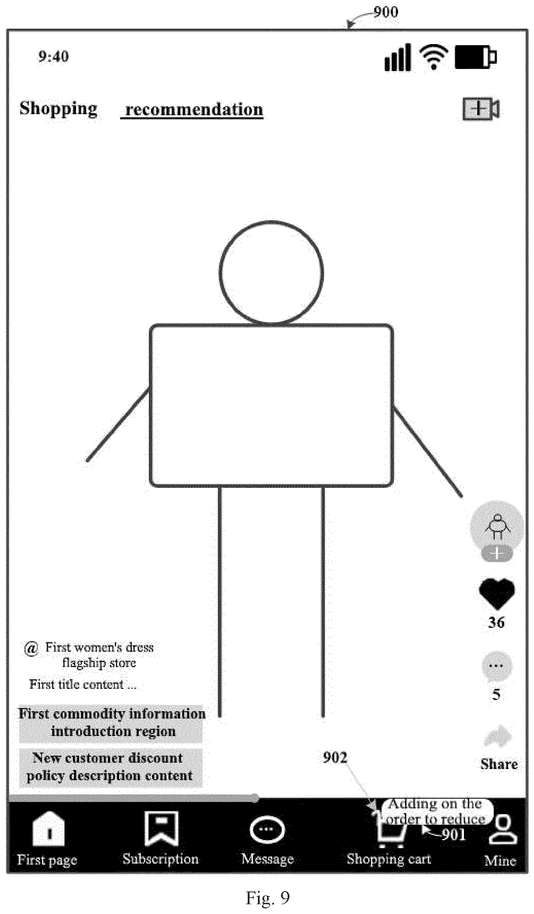

It should be noted that the embodiments of the present disclosure do not limit the application scenario of the above information presentation method. For example, it can be applied to some video display scenarios (for example, a video display scenario such as a live video or a short video). When the information presentation method is applied to the video presentation scenes, the S1 above may specifically include: in response to a trigger operation for a sixth control in the video presentation page, presenting the above object presentation page. Here, the video presentation page is used for presenting a video data (for example, live video data or short video data). Also, the embodiments of the present disclosure do not limit the video presentation page. For example, it may be a live video page (e.g., the page 900 shown in Fig. 9). Here, the sixth control is used for triggering a presentation flow for the object presentation page. Also, the embodiments of the present disclosure do not define the sixth control, which may be, for example, the control 902 in Fig. 9.

It should also be noted that, in order to better improve the user experience, the surrounding region on the above sixth control (e.g., the region 901 in Fig. 9) may present discount presentation information for some objects displayed in the above object presentation page (e.g., similar to discount information such as "reduced when having an add-on in the order", "a discount with 50 Yuan subtracted from the total price reaching 500 Yuan", "a discount with 50 Yuan subtracted when another 160 Yuan paid", "reduced by 10 Yuan for this order", and "a discount with 50 Yuan subtracted when another 160 Yuan paid", "reduced by 50 Yuan for this order"). Moreover, the discount presentation information may generally be determined based on the target user's account information above (e.g., whether it is a new user, etc.), and the state of some objects presented in the object presentation page (e.g., whether it is in a selected state). In addition, the embodiments of the present disclosure do not limit the determination of the discount presentation information. For example, it may be implemented using any existing or future developed method of determining the discount presentation information.

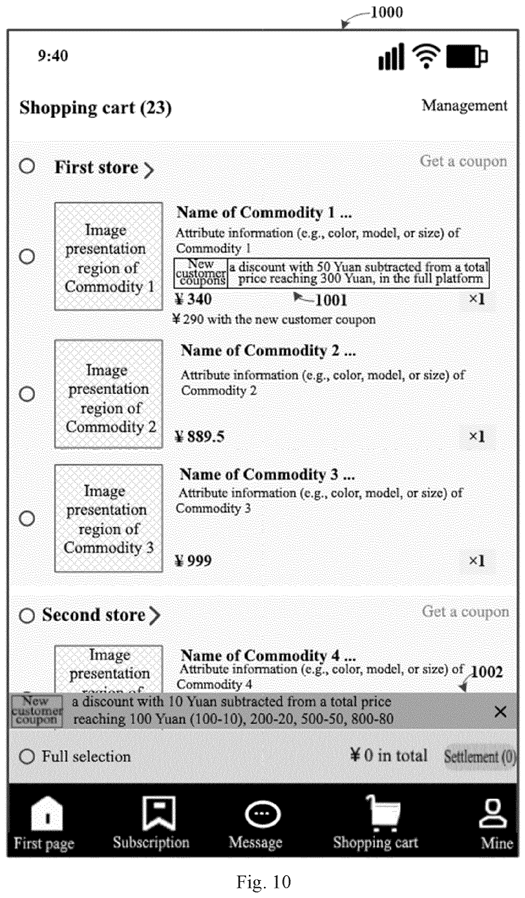

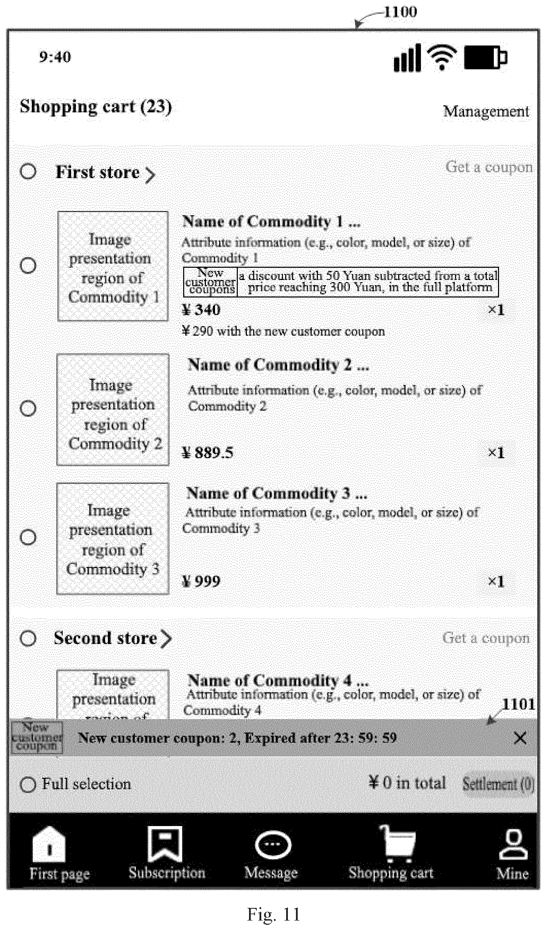

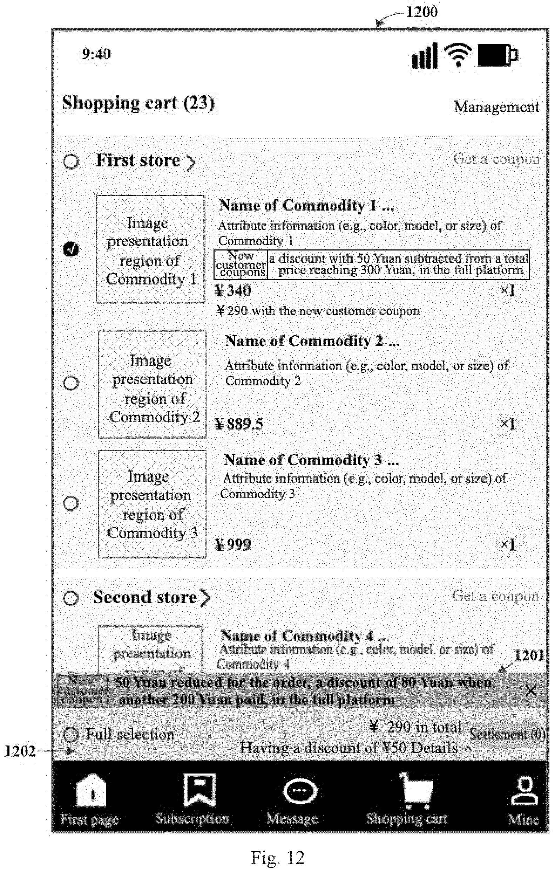

Indeed, to better improve the user experience, the embodiments of the present disclosure also provide one possible implementation of the above object presentation page, in which the object presentation page may include at least one of a group consisting of the first discount description information (e.g., the discount information in the region 1001 of Fig. 10), the second discount description information (e.g., the discount information in the region 1002 of Fig. 10, the discount information in the region 1101 of Fig. 11, or the discount information in the region 1201 of Fig. 12), and the third discount description information (e.g., the discount information in region 1202 of Fig. 12).

Here, the first discount description information is used for describing a resource discount policy for a certain object in the above object presentation page. The presentation location of the first discount description information is in the presentation region where the object is located in the object presentation page. For example, the first discount description information may be the discount information shown in the region 1001 of Fig. 10, so that the first discount description information can represent a resource discount policy for the Commodity 5 in the object presentation page.

The second discount description information is used for describing the resource discount policy corresponding to the account information of the above target user. For example, when the target user's account information indicates that the target user belongs to a new account, the second discount description information may be new customer discount information shown in the region 1002 in Fig. 10, new customer discount information shown in the region 1101 in Fig. 11, or new customer discount information shown in the region 1201 in Fig. 12.

In fact, because some resource discount policies are typically time sensitive, the second discount description information above may change over time in order to better improve the user experience. For example, the second discount description information may switch from one state to another state (e.g., switch from the discount information shown in the region 1002 in Fig. 10 to the discount information shown in the region 1101 in Fig. 11) because some resource discount policies are about to fail, so that the switched state better highlights the expiring resource discount policies.

In fact, as the user selects some objects in the above object presentation page, the user may access some resource discount policies, or may need to access some resource discount policies by the add-on in the order. Thus, in order to better improve the user experience, the above second discount description information may be changed according to the user's selection of some objects in the object presentation page. For example, when the user selects a second object (e.g., the Commodity 1 shown in Fig. 12) in the object presentation page, the second discount description information may be updated based on the resource value characterization data of the second object, such that the updated second discount description information (e.g., the discount information shown in the region 1201 in Fig. 12) can represent a discount state for the second object.

The above third discount description information is used to describe the discount state for some objects in the above object presentation page in the selected state (for example, the character string "having a discount of ¥50" shown in the region 1202 in Fig. 12). Also, the presentation location of the third discount description information is within the third information presentation region above. For example, the third discount description information may be the character string "having a discount of ¥50" as shown in the region 1202 in Fig. 12.

Based on the above-mentioned six paragraphs, it can be seen that, for a client used by the target user, when the client is displaying an object presentation page (for example, the page 1000 as shown in Fig. 10, the page 1100 as shown in Fig. 11 or the page 1200 as shown in Fig. 12), the discount information can be displayed in a plurality of regions in the object presentation page, so that the target user can better learn a resource discount policy which can be enjoyed, and thus the user experience can be effectively improved.

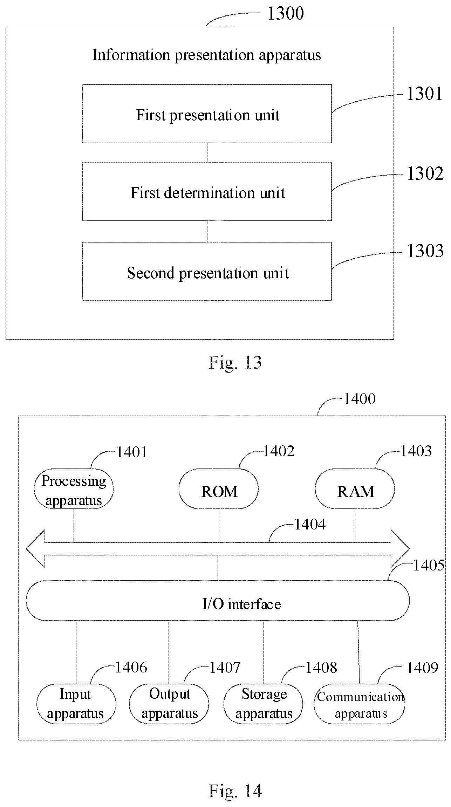

Embodiments of the present disclosure further provide an information presentation apparatus based on the information presentation method provided by the embodiments of the present disclosure, which will be explained and described with reference to Fig. 13. Fig. 13 is a structural schematic diagram of an information presentation apparatus according to an embodiment of the present disclosure. It should be noted that the technical details of the information presentation apparatus provided by the embodiments of the present disclosure can be referred to the above information presentation method.

As shown in Fig. 13, the information presentation apparatus 1300 provided by the embodiments of the present disclosure includes:

a first presentation unit 1301, configured to present an object presentation page, in which the object presentation page includes a first information presentation region;

a first determination unit 1302, configured to, after receiving a selection operation for a target object in the first information presentation region, when it is determined that a preset presentation condition is reached according to resource value characterization data of the target object and description information of a discount to be used, present a second information presentation region in the object presentation page; in which the second information presentation region includes an add-on object to be used; resource value characterization data of the add-on object to be used satisfies a resource condition to be used; the resource condition to be used is determined according to the resource value characterization data of the target object and the description information of the discount to be used; and

a second presentation unit 1303, configured to add the add-on object to be used to the first information presentation region for presentation in response to a trigger operation for the add-on object to be used, in which the add-on object to be used is in a selected state within the first information presentation region.

In one possible implementation, the second presentation unit 1303 is specifically configured to, in response to the trigger operation for the add-on object to be used, add the add-on object to be used to the first information presentation region for presentation, and cancel the presenting of the second information presentation region in the object presentation page.

In one possible implementation, the object presentation page further includes a third information presentation region; the second presentation unit 1303 is specifically configured to:

in response to the trigger operation for the add-on object to be used, adding the add-on object to be used to the first information presentation region for presentation and updating a presentation content of the third information presentation region; in which the presentation content includes a target resource value; and the target resource value is updated according to the resource value characterization data of the target object, the resource value characterization data of the add-on object to be used, and the description information of the discount to be used.

In one possible implementation, the second presentation unit 1303 is specifically configured to: in response to the trigger operation for the add-on object to be used, add the add-on object to be used to the first information presentation region for presentation, and present first prompt information on the object presentation page; in which the first prompt information is used for prompting that a sum value of the resource value characterization data of the target object and the resource value characterization data of the add-on object to be used has reached a discount threshold resource value in the description information of the discount to be used and/or resource discount description content in the description information of the discount to be used; and when a preset disappearance condition is satisfied, cancel the presenting of the first prompt information on the object presentation page.

In one possible implementation, the second information presentation region further includes a first control corresponding to the add-on object to be used; the second presentation unit 1303 is specifically configured to: in response to a trigger operation for the first control corresponding to the add-on object to be used, add the add-on object to be used to the first information presentation region for presentation.

In one possible implementation, the second information presentation region includes at least one candidate add-on object; the candidate add-on object is determined according to the resource value characterization data of the target object and the description information of the discount to be used; and the at least one candidate add-on object includes the add-on object to be used.

In one possible implementation, the second information presentation region further includes a second control; the information presentation apparatus 1300 provided by the embodiments of the present disclosure further includes:

a third presentation unit, configured to, after presenting the second information presentation region in the object presentation page, in response to a trigger operation for the second control, present an add-on object aggregation page on the object presentation page; in which the add-on object aggregation page includes at least one candidate add-on object; the at least one candidate add-on object includes the add-on object to be used; and

a fourth presentation unit, configured to, in response to a selection operation for a target add-on object in the at least one candidate add-on object, cancel the presenting of the add-on object aggregation page on the object presentation page, canceling the presenting of the second information presentation region on the object presentation page, and adding the target add-on object to the first information presentation region for presentation; in which the target add-on object is in a selected state within the first information presentation region.

In one possible implementation, historical operation information of the add-on object to be used satisfies a first information condition; the first information condition is that the historical operation information indicates that a total number of operations on the add-on object to be used reaches a preset number of times threshold; or interaction description information of the add-on object to be used satisfies a second information condition; and the second information condition is that the interaction description information indicates that a ratio of a total number of times of ordering operations for the add-on object to be used to a total number of times of operations for the add-on object to be used reaches a preset ratio threshold.

In one possible implementation, the object presentation page further includes a third control; and the information presentation apparatus 1300 provided by the embodiments of the present disclosure further includes: a third presentation unit, configured to generate and present an object order in response to a trigger operation for the third control.

In one possible implementation, the object presentation page is a page to be ordered; and the first information presentation region is used for presenting at least one object to be ordered.

Based on the above-mentioned relevant contents of the information presentation apparatus 1300, it can be seen that with regard to the information presentation apparatus 1300 provided in the embodiments of the present disclosure, when the information presentation apparatus 1300 is presenting an object presentation page (for example, a page to be ordered) and the object presentation page includes a first information presentation region (namely, a presentation region of at least one object to be ordered), after the information presentation apparatus 1300 receives a selection operation for a target object (for example, a first object to be ordered) in the first information presentation region, when it is determined that a preset presentation condition is reached according to the resource value characterization data of the target object and the description information of the discount to be used, it can be determined that the resource value characterization data of the target object does not reach the discount threshold resource value carried by the description information of the discount to be used. Therefore, the information presentation apparatus 1300 presents a second information presentation region in the object presentation page, the second information presentation region can provide one or more add-on objects. Thus, after the information presentation apparatus 1300 receives a trigger operation for the add-on object to be used in the second information presentation region, the add-on object to be used is added to the first information presentation region for presentation, and the add-on object to be used is in a selected state in the first information presentation region, thereby enabling the sum of resource value characterization data of two objects in the selected state within the first information presentation region to reach the discount threshold resource value carried by the description information of the discount to be used, thereby enabling the subsequent use of the description information of the discount to be used to participate in an ordering process for the two objects. Thus, an object adding-on process can be effectively simplified, so that the user can determine an add-on object in the shortest possible time, thereby effectively improving the add-on efficiency for the user, and effectively improving the object purchase experience (in particular, an object add-on experience) of the user.

In addition, because the resource value characterization data of the add-on object to be used satisfies the resource condition to be used, and the resource condition to be used is determined according to the resource value characterization data of the target object and the description information of the discount to be used, the sum value of the resource value characterization data of the add-on object to be used and the resource value characterization data of the target object can satisfy the discount threshold resource value carried by the description information of the discount to be used, so that the user can use the resource discount policy described by the description information of the discount to be used when the user simultaneously selects the add-on object to be used and the target object. This enables the user to purchase as many objects as possible with as smaller resource value as possible, which is advantageous to improve the user's object purchase experience.

In addition, the embodiments of the present disclosure further provide an electronic device, device includes a processor and a memory; the memory is configured to store instructions or computer programs; and the processor is configured to execute the instructions or computer programs in the memory to cause the electronic device to perform any implementation of the information presentation method provided by the embodiments of the present disclosure.

Referring to FIG. 14, FIG. 14 illustrates a schematic structural diagram of an electronic device 1400 suitable for implementing some embodiments of the present disclosure. The terminal devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), or the like, and fixed terminals such as a digital TV, a desktop computer, or the like. The electronic device illustrated in FIG. 14 is merely an example, and should not pose any limitation to the functions and the range of use of the embodiments of the present disclosure.

As illustrated in FIG. 14, the electronic device 1400 may include a processing apparatus 1401 (e.g., a central processing unit, a graphics processing unit, etc.), which can perform various suitable actions and processing according to a program stored in a read-only memory (ROM) 1402 or a program loaded from a storage apparatus 1408 into a random-access memory (RAM) 1403. The RAM 1403 further stores various programs and data required for operations of the electronic device 1400. The processing apparatus 1401, the ROM 1402, and the RAM 1403 are interconnected by means of a bus 1404. An input/output (I/O) interface 1405 is also connected to the bus 1404.

Usually, the following apparatus may be connected to the I/O interface 1405: an input apparatus 1406 including, for example, a touch screen, a touch pad, a keyboard, a mouse, a camera, a microphone, an accelerometer, a gyroscope, or the like; an output apparatus 1407 including, for example, a liquid crystal display (LCD), a loudspeaker, a vibrator, or the like; a storage apparatus 1408 including, for example, a magnetic tape, a hard disk, or the like; and a communication apparatus 1409. The communication apparatus 1409 may allow the electronic device 1400 to be in wireless or wired communication with other devices to exchange data. While FIG. 14 illustrates the electronic device 1400 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 1409 and installed, or may be installed from the storage apparatus 1208, or may be installed from the ROM 1402. When the computer program is executed by the processing apparatus 1401, the above-mentioned functions defined in the methods of some embodiments of the present disclosure are performed.

The electronic device provided by the embodiments of the present disclosure belongs to the same inventive concept as the method provided by the above-mentioned embodiments. The technical details not described in detail in the present embodiment may be referred to the above-mentioned embodiments. The present embodiment has the same advantageous effects as the above-mentioned embodiments.

The embodiments of the present disclosure further provide a computer-readable medium, the computer-readable medium stores instructions or computer programs, when the instructions or computer programs run on a device, the device is caused to perform any implementation of the information presentation method provided by the embodiments of the present disclosure.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above computer-readable medium carries one or more programs, and when the one or more programs are excuted by the electronic device, the electronic device is caused to perform the above method.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

It should be noted that the various embodiments in the present disclosure are described in a progressive manner, with each embodiment focusing on the differences from other embodiments, and similar parts between the various embodiments may be referred to each other. For the systems or apparatuses disclosed in the embodiments, because they correspond to the methods disclosed in the embodiments, the description is relatively simple, and the relevant parts may refer to the description of the methods for details.

It should be understood that, in the present disclosure, "at least one (item)" refers to one or more, and "a plurality of" refers to two or more. "And/or" is used to describe the association relationship between associated objects, indicating that there may be three relationships. For example, "A and/or B" may indicate: only A exists, only B exists, and both A and B exist simultaneously, where A, B may be singular or plural. The character "/" generally indicates that the associated objects before and after are in a kind of "or" relationship. "At least one (item)" or similar expressions refer to any combination of these items, including any combination of single (item) or multiple (items). For example, at least one (item) of a, b, or c may indicate: a, b, c, "a and b", "a and c", "b and c", or "a, b, and c", where a, b, and c may be singular or plural.

It should be noted that in the present disclosure, relational terms such as "first," "second," etc. are only used to distinguish one entity or operation from another entity or operation, and do not necessarily require or imply the existence of any actual relationship or order between these entities or operations. Furthermore, the terms "comprise," "comprising," "include," "including," etc., or any other variant thereof are intended to cover non-exclusive inclusion, such that a process, method, article or device comprising a set of elements includes not only those elements, but also other elements not expressly listed, or other elements not expressly listed for the purpose of such a process, method, article or device, or elements that are inherent to such process, method, article or device. Without further limitation, an element defined by the phrase "includes a ..." does not preclude the existence of additional identical elements in the process, method, article or device that includes the element.

The steps of a method or algorithm described in connection with the embodiments disclosed herein may be implemented directly in a hardware, a software module executed by a processor, or a combination of the both. The software module may be in an RAM, a memory, an ROM, an electrically programmable ROM, an electrically erasable programmable ROM, a register, a hard disk, a removable disk, a CD-ROM, or any other form of storage medium known in the art.

The previous descriptions of the embodimentss of the present disclosure are provided to enable any person skilled in the art to achive or use the present disclosure. Various modifications to these embodiments will be obvious to those skilled in the art. The generic principles defined herein may be implemented in other embodiments without departing from the spirit or scope of the present disclosure. Thus, the present disclosure is not limited to the embodiments shown herein but accords with the widest scope consistent with the principles and novel features disclosed herein.

## Claims

1. An information presentation method, wherein the method comprises:

   presenting an object presentation page, wherein the object presentation page comprises a first information presentation region;
   after receiving a selection operation for a target object in the first information presentation region, when it is determined that a preset presentation condition is reached according to resource value characterization data of the target object and description information of a discount to be used, presenting a second information presentation region in the object presentation page; wherein the second information presentation region comprises an add-on object to be used; resource value characterization data of the add-on object to be used satisfies a resource condition to be used; the resource condition to be used is determined according to the resource value characterization data of the target object and the description information of the discount to be used; and
   adding the add-on object to be used to the first information presentation region for presentation in response to a trigger operation for the add-on object to be used, wherein the add-on object to be used is in a selected state within the first information presentation region.

2. The method according to claim 1, wherein the adding the add-on object to be used to the first information presentation region for presentation in response to a trigger operation for the add-on object to be used comprises:
   in response to the trigger operation for the add-on object to be used, adding the add-on object to be used to the first information presentation region for presentation, and canceling the presenting of the second information presentation region in the object presentation page.

3. The method according to claim 1, wherein the object presentation page further comprises a third information presentation region;
   the adding the add-on object to be used to the first information presentation region for presentation in response to the trigger operation for the add-on object to be used comprises:
   in response to the trigger operation for the add-on object to be used, adding the add-on object to be used to the first information presentation region for presentation and updating a presentation content of the third information presentation region; wherein the presentation content comprises a target resource value; and the target resource value is updated according to the resource value characterization data of the target object, the resource value characterization data of the add-on object to be used, and the description information of the discount to be used.

4. The method according to claim 1, wherein the adding the add-on object to be used to the first information presentation region for presentation in response to a trigger operation for the add-on object to be used comprises:

   in response to the trigger operation for the add-on object to be used, adding the add-on object to be used to the first information presentation region for presentation, and presenting first prompt information on the object presentation page; wherein the first prompt information is used for prompting that a sum value of the resource value characterization data of the target object and the resource value characterization data of the add-on object to be used has reached a discount threshold resource value in the description information of the discount to be used and/or resource discount description content in the description information of the discount to be used; and
   when a preset disappearance condition is satisfied, canceling the presenting of the first prompt information on the object presentation page.

5. The method according to claim 1, wherein the second information presentation region further comprises a first control corresponding to the add-on object to be used;

the adding the add-on object to be used to the first information presentation region for presentation in response to the trigger operation for the add-on object to be used comprises:

in response to a trigger operation for the first control corresponding to the add-on object to be used, adding the add-on object to be used to the first information presentation region for presentation.

6. The method according to claim 1, wherein the second information presentation region comprises at least one candidate add-on object; the candidate add-on object is determined according to the resource value characterization data of the target object and the description information of the discount to be used; and the at least one candidate add-on object comprises the add-on object to be used.

7. The method according to claim 1, wherein the second information presentation region further comprises a second control; and

after presenting the second information presentation region in the object presentation page, the method further comprises:

in response to a trigger operation for the second control, presenting an add-on object aggregation page on the object presentation page; wherein the add-on object aggregation page comprises at least one candidate add-on object; the at least one candidate add-on object comprises the add-on object to be used;

in response to a selection operation for a target add-on object in the at least one candidate add-on object, canceling the presenting of the add-on object aggregation page on the object presentation page, canceling the presenting of the second information presentation region on the object presentation page, and adding the target add-on object to the first information presentation region for presentation; and the target add-on object is in a selected state within the first information presentation region.

8. The method according to claim 1, wherein historical operation information of the add-on object to be used satisfies a first information condition; the first information condition is that the historical operation information indicates that a total number of operations on the add-on object to be used reaches a preset number of times threshold;
or
interaction description information of the add-on object to be used satisfies a second information condition; and the second information condition is that the interaction description information indicates that a ratio of a total number of times of ordering operations for the add-on object to be used to a total number of times of operations for the add-on object to be used reaches a preset ratio threshold.

9. The method according to claim 1, wherein the object presentation page further comprises a third control; and

after the adding the add-on object to be used to the first information presentation region for presentation, the method further comprises:

generating and presenting an object order in response to a trigger operation for the third control.

10. The method according to claim 1, wherein the object presentation page is a page to be ordered; and the first information presentation region is used for presenting at least one object to be ordered.

11. An information presentation apparatus, comprising:

a first presentation unit, configured to present an object presentation page, wherein the object presentation page comprises a first information presentation region;

a first determination unit, configured to, after receiving a selection operation for a target object in the first information presentation region, when it is determined that a preset presentation condition is reached according to resource value characterization data of the target object and description information of a discount to be used, present a second information presentation region in the object presentation page; wherein the second information presentation region comprises an add-on object to be used; resource value characterization data of the add-on object to be used satisfies a resource condition to be used; the resource condition to be used is determined according to the resource value characterization data of the target object and the description information of the discount to be used; and

a second presentation unit, configured to add the add-on object to be used to the first information presentation region for presentation in response to a trigger operation for the add-on object to be used, wherein the add-on object to be used is in a selected state within the first information presentation region.

12. An electronic device, wherein the device comprises a processor and a memory;

the memory is configured to store instructions or computer programs; and
the processor is configured to execute the instructions or computer programs in the memory to cause the electronic device to perform the method according to any one of claims 1-10.

13. A computer-readable medium, wherein the computer-readable medium stores instructions or computer programs, when the instructions or computer programs run on a device, the device is caused to perform the method according to any one of claims 1-10.

14. A computer program product, comprising a computer program carried on a non-transitory computer readable medium, wherein the computer program comprises program codes for performing the method according to any one of claims 1-10.

Presenting an object presentation page, in which S1 the object presentation page includes a first information presentation region — S1

After receiving a selection operation for the target object in the first information presentation region, when it is determined that a preset presentation condition is reached according to the resource value characterization data of the target object and the description information of the discount to be used, presenting a second information presentation region in the object presentation page — S2

in response to a trigger operation for the add-on object to be used in the second information presentation region, adding the add-on object to be used to the first information presentation region for presentation, in which the add-on object to be used is in a selected state within the first information presentation region; the resource value characterization data of the add-on object to be used satisfies the resource condition to be used; and the resource condition to be used is determined according to the resource value characterization data of the target object and the description information of the discount to be used — S3

Fig. 1

_200_

9:40

**Shopping cart (1)**        Management

_201_

○ **First store** ❯      Get a coupon

_202_

| Image presentation region of Commodity 1 | **Name of Commodity 1 ...** <br> Attribute information (e.g., color, model, or size) of Commodity 1 |

○ ¥ 340        ×1

_203_

| New customer coupon | a discount with 10 Yuan subtracted from a total price reaching 100 Yuan (100-10), 200-20, 500-50, 800-80, ... | ✕ |

○ Full selection      ¥ 0 in total    Settlement (0)

First page    Subscription    Message    Shopping cart    Mine

Fig. 2

_300_

9:40

Shopping cart (1)    Management

_306_

○ **First store** >    Get a coupon

_303_

| Image presentation region of Commodity 1 | **Name of Commodity 1...** Attribute information (e.g., color, model, or size) of Commodity 1 |
|---|---|
| | ¥ 340    ×1 |

_301_

**Add-on assistant:**    _304_

| Image presentation region of Commodity 5 | **Name of Commodity 5...** Attribute information (e.g., color, model, or size) of Commodity 5 |
|---|---|
| | ¥ 180    ×1 |

_302_    One-key for adding the commodity to the shopping cart

Immediately have a discount of 50 Yuan when adding the commodity to the shopping cart
Add the commodities you have browsed to settle together to enjoy
a new customer coupon 500-50

_305_

_307_

| New customer coupons | a discount with 50 Yuan subtracted from a total price reaching 500 Yuan, in the full platform | a discount with 50 Yuan subtracted when another 160 Yuan paid | × |

○ Full selection    ¥340 in total    Settlement (1)

First page    Subscription    Message    Shopping cart    Mine

Fig. 3

25

9:40

**Shopping cart (1)**                                         Management

○ **First store** ⟩                                         Get a coupon

| Image presentation region of Commodity 1 | **Name of Commodity 1...**<br>Attribute information (e.g., color, model, or size) of Commodity 1<br><br>¥ 340 | ×1 |

—401

**Add-on assistant:**

Immediately have a discount of 50 Yuan when adding the commodity to the shopping cart

Add the commodities you have browsed to settle together to enjoy a new customer coupon 500-50

One-key for adding the commodity to the shopping cart

| Image presentation region of Commodity 5 | **Name of Commodity 5 ...**<br>Attribute information (e.g., color, model, or size) of Commodity 5<br>¥ 180          ×1 |

One-key for adding the commodity to the shopping cart

| Image presentation region of Commodity 6 | **Name of Commodity 6 ...**<br>Attribute information (e.g., color, model, or size) of Commodity 6<br>¥ 190          ×1 |

One-key for adding the commodity to the shopping cart

| Image presentation region of Commodity 7 | **Name of Commodity 7 ...**<br>Attribute information (e.g., color, model, or size) of Commodity 7<br>¥ 196          ×1 |

One-key for adding the commodity to the shopping cart

| Image presentation region of Commodity 8 | **Name of Commodity 8 ...**<br>Attribute information (e.g., color, model, or size) of Commodity 8<br>¥ 199          ×1 |

⌄

| New customer coupons | a discount with 50 Yuan subtracted from a total price reaching 500 Yuan, in the full platform | **a discount with 50 Yuan subtracted when another 160 Yuan paid** | ✕ |

○ Full selection                              ¥340 in total   Settlement (1)

First page    Subscription    Message    Shopping cart    Mine

Fig. 4

500

9:40

## Shopping cart (1)                              Management

○  **First store** ›                              Get a coupon

| Image presentation region of Commodity 1 | **Name of Commodity 1...**<br>Attribute information (e.g., color, model, or size) of Commodity 1 |
|---|---|
| | ¥ 340                              ×1 |

501

502

## Add-on assistant:

More commodities

| Image presentation region of Commodity 5 | **Name of Commodity 5...**<br>Attribute information (e.g., color, model, or size) of Commodity 5 |
|---|---|
| | ¥ 180                              ×1 |

One-key for adding the commodity to the shopping cart

Immediately have a discount of 50 Yuan when adding the commodity to the shopping cart
Add the commodities you have browsed to settle
together to enjoy a new customer coupon 500-50

| New customer coupons | a discount with 50 Yuan subtracted from a total price reaching 500 Yuan, in the full platform | **a discount with 50 Yuan subtracted when another 160 Yuan paid** | ✕ |

○  Full selection                    ¥340 in total   Settlement (1)

| First page | Subscription | Message | Shopping cart | Mine |

Fig. 5

500

9:40

**Shopping cart (1)**

Management

○ **First store** ＞

Get a coupon

| | Image presentation region of Commodity 1 | **Name of Commodity 1...** Attribute information (e.g., color, model, or size) of Commodity 1 |
|---|---|---|

✔

¥ 340                                                                    ×1

601

←

**Add-on quality goods**

602

**Commodities you browsed**

604

One-key for adding the commodity to the shopping cart

| Image presentation region of Commodity 5 | **Name of Commodity 5 ...** Attribute information (e.g., color, model, or size) of Commodity 5 ¥ 180          ×1 |
|---|---|

One-key for adding the commodity to the shopping cart

| Image presentation region of Commodity 6 | **Name of Commodity 6 ...** Attribute information (e.g., color, model, or size) of Commodity 6 ¥ 190          ×1 |
|---|---|

≫

603

**Highly converted commodity**

One-key for adding the commodity to the shopping cart

| Image presentation region of Commodity 9 | **Name of Commodity 9 ...** Attribute information (e.g., color, model, or size) of Commodity 9 ¥ 196          ×1 |
|---|---|

One-key for adding the commodity to the shopping cart

| Image presentation region of Commodity 8 | **Name of Commodity 8 ...** Attribute information (e.g., color, model, or size) of Commodity 8 ¥ 199          ×1 |
|---|---|

≫

Slide down to see other types of add-on quality goods

Fig. 6

700

9:40

**Shopping cart** (2)                    Management

○ **First store** 〉                     Get a coupon

| Image presentation region of Commodity 1 | **Name of Commodity 1...** Attribute information (e.g., color, model, or size) of Commodity 1 |
| | ¥ 340                                    ×1 |

| Image presentation region of Commodity 5 | **Name of Commodity 5 ...** Attribute information (e.g., color, model, or size) of Commodity 5 |
| | ¥ 180                                    ×1 |

702

New customer coupon **having a discount of ¥50**                    ×    704

703 ○ Full selection                    ¥470 in total    Settlement (2)
                        Having a discount of ¥50 Details ∧

First page    Subscription    Message    Shopping cart    Mine

Fig. 7

Fig. 8

Fig. 9

1000

9:40

**Shopping cart (23)**                                    Management

○ **First store** ›                               Get a coupon

○  | Image presentation region of Commodity 1 |  **Name of Commodity 1 ...**
Attribute information (e.g., color, model, or size) of Commodity 1
| New customer coupons | a discount with 50 Yuan subtracted from a total price reaching 300 Yuan, in the full platform |
¥ 340              ▶ 1001                    ×1
¥ 290 with the new customer coupon

○  | Image presentation region of Commodity 2 |  **Name of Commodity 2 ...**
Attribute information (e.g., color, model, or size) of Commodity 2

¥ 889.5                                      ×1

○  | Image presentation region of Commodity 3 |  **Name of Commodity 3 ...**
Attribute information (e.g., color, model, or size) of Commodity 3

¥ 999                                        ×1

○ **Second store** ›                            Get a coupon

| Image presentation region of |  **Name of Commodity 4 ...**
Attribute information (e.g., color, model, or size) of 1002
Commodity 4

| New customer coupon | a discount with 10 Yuan subtracted from a total price reaching 100 Yuan (100-10), 200-20, 500-50, 800-80 |    ×

○ Full selection                    ¥ 0 in total   Settlement (0)

First page    Subscription    Message    Shopping cart    Mine

Fig. 10

—1100

9:40 ‖ ╲ ⬛

## Shopping cart (23)

Management

○ **First store** ⟩

Get a coupon

○

| Image presentation region of Commodity 1 |
|---|

**Name of Commodity 1 ...**

Attribute information (e.g., color, model, or size) of Commodity 1

| New customer coupons | a discount with 50 Yuan subtracted from a total price reaching 300 Yuan, in the full platform |
|---|---|

**¥ 340** ×1

¥ 290 with the new customer coupon

○

| Image presentation region of Commodity 2 |
|---|

**Name of Commodity 2 ...**

Attribute information (e.g., color, model, or size) of Commodity 2

**¥ 889.5** ×1

○

| Image presentation region of Commodity 3 |
|---|

**Name of Commodity 3 ...**

Attribute information (e.g., color, model, or size) of Commodity 3

**¥ 999** ×1

○ **Second store** ⟩

Get a coupon

| Image presentation |
|---|

**Name of Commodity 4 ...**

Attribute information (e.g., color, model, or size) of Commodity 4

1101

| New customer coupon | **New customer coupon: 2, Expired after 23: 59: 59** | ✕ |
|---|---|---|

○ Full selection ¥ 0 in total Settlement (0)

| ⌂ First page | ▣ Subscription | ⊙ Message | 🛒 Shopping cart | ⚲ Mine |
|---|---|---|---|---|

Fig. 11

1200

9:40

**Shopping cart (23)**                              Management

○ **First store** ⟩                          Get a coupon

Image presentation region of Commodity 1

**Name of Commodity 1 ...**
Attribute information (e.g., color, model, or size) of Commodity 1
| New customer coupons | a discount with 50 Yuan subtracted from a total price reaching 300 Yuan, in the full platform |

¥ 340                                              ×1
¥ 290 with the new customer coupon

Image presentation region of Commodity 2

**Name of Commodity 2 ...**
Attribute information (e.g., color, model, or size) of Commodity 2

¥ 889.5                                            ×1

Image presentation region of Commodity 3

**Name of Commodity 3 ...**
Attribute information (e.g., color, model, or size) of Commodity 3

¥ 999                                              ×1

○ **Second store** ⟩                         Get a coupon

Image presentation region of

**Name of Commodity 4 ...**
Attribute information (e.g., color, model, or size) of Commodity 4

1201

| New customer coupon | **50 Yuan reduced for the order, a discount of 80 Yuan when another 200 Yuan paid, in the full platform** |   ✕

○ Full selection                    ¥ 290 in total   Settlement (0)

1202          Having a discount of ¥50 Details ∧

🏠 First page    🔖 Subscription    ⊙ Message    🛒 Shopping cart    👤 Mine

Fig. 12

1300

Information presentation apparatus

First presentation unit — 1301

First determination unit — 1302

Second presentation unit — 1303

Fig. 13

1400

1401 Processing apparatus

1402 ROM

1403 RAM

1404

1405

I/O interface

1406 Input apparatus

1407 Output apparatus

1408 Storage apparatus

1409 Communication apparatus

Fig. 14

## INTERNATIONAL SEARCH REPORT

| International application No. |
| --- |
| **PCT/CN2023/118205** |

**A. CLASSIFICATION OF SUBJECT MATTER**

G06Q 30/06(2023.01)i

According to International Patent Classification (IPC) or to both national classification and IPC

**B. FIELDS SEARCHED**

Minimum documentation searched (classification system followed by classification symbols)

IPC: G06Q

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 凑单, 购物车, 优惠, 对象, 商品, 信息, 显示, 展示, 区域, 选择, 选定, shopping, preferential, favorable, object, commodity, goods, information, display, region, area, select

**C. DOCUMENTS CONSIDERED TO BE RELEVANT**

| Category* | Citation of document, with indication, where appropriate, of the relevant passages | Relevant to claim No. |
| --- | --- | --- |
| X | CN 113888208 A (ALIBABA (CHINA) CO., LTD.) 04 January 2022 (2022-01-04) claims 1-14, and description, paragraphs [0002]-[0004] and [0078]-[0163] | 1-14 |
| X | CN 113469738 A (SHENZHEN ETEKCITY TECHNOLOGY CO., LTD.) 01 October 2021 (2021-10-01) claims 1-11, and description, paragraphs [0047]-[0110] | 1-14 |
| A | CN 114997955 A (RAJAX NETWORK TECHNOLOGY CO., LTD.) 02 September 2022 (2022-09-02) entire document | 1-14 |
| A | CN 107180371 A (BEIJING JINGDONG SHANGKE INFORMATION TECHNOLOGY CO., LTD. et al.) 19 September 2017 (2017-09-19) entire document | 1-14 |
| A | CN 111724229 A (SHISHI TONGYUN TECHNOLOGY (CHENGDU) CO., LTD.) 29 September 2020 (2020-09-29) entire document | 1-14 |
| A | WO 2022116954 A1 (ALIBABA GROUP HOLDING LIMITED) 09 June 2022 (2022-06-09) entire document | 1-14 |

☐ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **02 November 2023** | **09 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/118205**

| Patent document cited in search report | | | Publication date (day/month/year) | Patent family member(s) | | | Publication date (day/month/year) |
|---|---|---|---|---|---|---|---|
| CN | 113888208 | A | 04 January 2022 | None | | | |
| CN | 113469738 | A | 01 October 2021 | None | | | |
| CN | 114997955 | A | 02 September 2022 | None | | | |
| CN | 107180371 | A | 19 September 2017 | None | | | |
| CN | 111724229 | A | 29 September 2020 | None | | | |
| WO | 2022116954 | A1 | 09 June 2022 | CN | 113298604 | A | 24 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211137330